# EUROPEAN PATENT APPLICATION

(11) **EP 4 711 193 A1**
(43) Date of publication of application: **18.03.2026**
(21) Application number: 25201820.5
(22) Date of filing: 12.09.2025
(51) Int. Cl.: B60L 53/16, B60L 53/30, B60L 53/60, B60L 58/26, B60L 53/14, B60L 53/31, B60L 53/302

(54) **CHARGING PILE**

(30) Priority: 13.09.2024 CN 202411292239
(71) Applicant: Huawei Digital Power Technologies Co., Ltd., Shenzhen, Guangdong 518043 (CN)
(72) Inventor: Song, Jinliang, Shenzhen, 518043 (CN); Hu, Minggui, Shenzhen, 518043 (CN)
(74) Representative: Gill Jennings & Every LLP

(57) **Abstract**

This application provides a charging pile (30). The charging pile (30) includes a liquid cooling device (50) and a charging device (40). The liquid cooling device (50) includes a heat exchanger (51). A coolant inlet and a coolant outlet of the heat exchanger (51) are connected to a liquid cooling channel of a to-be-cooled component in the charging device to form a coolant supply loop. The liquid cooling device (50) further includes a liquid cooling connector, and the liquid cooling connector is configured to connect to a liquid cooling port of an electric vehicle (60). The liquid cooling device (50) is configured to output coolant to the electric vehicle (60) through the liquid cooling connector. The charging device (40) is configured to deliver electric energy to the electric vehicle (60) when receiving a packet indicating that the liquid cooling device has delivered the coolant to the electric vehicle (60). In this application, efficiency and safety of charging the electric vehicle can be improved.

## Description

### TECHNICAL FIELD

This application relates to the field of charging, and in particular, to a charging pile.

### BACKGROUND

As a charging device continuously evolves to an ultra-fast charging device, a charging power output by a plurality of charging modules in a power unit to an electric vehicle via a charger continuously increases, to implement ultra-fast charging on a power battery of the electric vehicle. However, as the charging power continuously increases, heat generated by the electric vehicle increases accordingly. If the heat cannot be discharged in a timely manner, a temperature of the electric vehicle increases. However, an excessively high temperature is prone to affect normal high-power charging of the electric vehicle, and consequently causes a decrease in efficiency and safety of charging the electric vehicle.

### SUMMARY

This application provides a charging pile, to improve efficiency and safety of charging an electric vehicle.

According to a first aspect, a charging pile is provided. The charging pile includes a liquid cooling device and a charging device, the liquid cooling device includes a heat exchanger, a coolant inlet and a coolant outlet of the heat exchanger are connected to a liquid cooling channel of a to-be-cooled component in the charging device to form a coolant supply loop, the liquid cooling device further includes a liquid cooling connector, the liquid cooling connector is configured to connect to a liquid cooling port of an electric vehicle, and the liquid cooling device is configured to output coolant to the electric vehicle through the liquid cooling connector. The charging device is configured to deliver electric energy to the electric vehicle when receiving a packet indicating that the liquid cooling device has delivered the coolant to the electric vehicle.

In embodiments of this application, in a process of charging the electric vehicle by the charging device, the liquid cooling device may deliver the coolant to the electric vehicle through the liquid cooling connector. The coolant may absorb heat generated in the process of charging the electric vehicle, to implement liquid cooling heat dissipation for the electric vehicle. This can meet a heat dissipation requirement of high-power charging of the electric vehicle and facilitate normal high-power charging of the electric vehicle, to improve efficiency and safety of charging the electric vehicle.

In addition, the charging device delivers electric energy to the electric vehicle only after receiving the packet indicating that the liquid cooling device has delivered the coolant to the electric vehicle. This can ensure that the electric vehicle is charged only under a condition that the electric vehicle has a heat dissipation capability, to prevent a charging exception that may occur when the electric vehicle has been in a charging state but the liquid cooling device cannot deliver the coolant to the electric vehicle in a timely manner. In this way, the efficiency and safety of charging the electric vehicle can be further improved.

With reference to the first aspect, in a possible design, the charging device is configured to: when the liquid cooling device delivers the coolant to the charging device, and a pressure of the liquid cooling channel is less than a first preset required pressure, or a flow velocity of the liquid cooling channel is less than a first preset required flow velocity, reduce a power for delivery to the electric vehicle, and send, to the liquid cooling device, a packet indicating to stop coolant delivery. The first preset required pressure is a pressure corresponding to the liquid cooling channel when the charging device charges the electric vehicle at a power required by the electric vehicle and the liquid cooling device delivers the coolant to the charging device at a coolant flow rate required by the charging device; and the first preset required flow velocity is a flow velocity corresponding to the liquid cooling channel when the charging device charges the electric vehicle at the power required by the electric vehicle and the liquid cooling device delivers the coolant to the charging device at the coolant flow rate required by the charging device.

In embodiments of this application, when the pressure of the liquid cooling channel is less than the first preset required pressure of the liquid cooling channel, or the flow velocity of the liquid cooling channel is less than the first preset required flow velocity of the liquid cooling device, it indicates that coolant leakage occurs in a process in which the liquid cooling device delivers the coolant to the charging device. In this case, the charging device may reduce the power for delivery to the electric vehicle and send, to the liquid cooling device, the packet indicating to stop coolant delivery. As the power decreases, the heat dissipation requirement of the charging device decreases, and the charging device may send, to the liquid cooling device, the packet indicating to stop coolant delivery. In this way, the liquid cooling device stops delivering the coolant to the charging device, and heat of the charging device is naturally discharged to a current environment, to implement heat dissipation of the liquid cooling device. For the electric vehicle, because the charging power of the electric vehicle is reduced, heat dissipation may be performed by using a heat management system of the electric vehicle, to meet the heat dissipation requirement of the electric vehicle. In this way, it is ensured as much as possible that the charging device normally charges the electric vehicle, to improve reliability of charging the electric vehicle by the charging device, and further improve user experience.

In addition, when coolant leakage occurs in the process in which the liquid cooling device delivers the coolant to the charging device, a specific location of coolant leakage is not determined. It is possible that coolant leakage occurs in a liquid cooling channel of the liquid cooling device, or the liquid cooling channel of the charging device, or both the liquid cooling channel of the liquid cooling device and the liquid cooling channel of the charging device. In this application, it is designed that the liquid cooling device stops delivering the coolant to the charging device, so that the liquid cooling channel of the liquid cooling device and the liquid cooling channel of the charging device can be detected, to determine the specific location of coolant leakage, and repair or replace the liquid cooling channel. In this way, subsequent normal high-power charging of the electric vehicle by the charging device is ensured, so that reliability of charging the electric vehicle by the charging device can be further improved, and user experience is further improved. In addition, when coolant leakage occurs, the coolant of the liquid cooling device may leak. In this case, the liquid cooling device may stop delivering the coolant to the electric vehicle, to prevent further leakage of the coolant of the liquid cooling device.

With reference to the first aspect, in a possible design, the charging device is configured to: when the liquid cooling device delivers the coolant to the electric vehicle, when a pressure of a liquid cooling channel between the liquid cooling device and the electric vehicle is less than a second preset required pressure, or a flow velocity of a liquid cooling channel between the liquid cooling device and the electric vehicle is less than a second preset required flow velocity, stop delivering electric energy to the electric vehicle. The second preset required pressure is a pressure corresponding to the liquid cooling channel between the liquid cooling device and the electric vehicle when the charging device charges the electric vehicle at the power required by the electric vehicle and the liquid cooling device delivers the coolant to the electric vehicle at a coolant flow rate required by the electric vehicle; and the second preset required flow velocity is a flow velocity corresponding to the liquid cooling channel between the liquid cooling device and the electric vehicle when the charging device charges the electric vehicle at the power required by the electric vehicle and the liquid cooling device delivers the coolant to the electric vehicle at the coolant flow rate required by the electric vehicle.

In embodiments of this application, when the pressure of the liquid cooling channel is less than the second preset required pressure, or the flow velocity of the liquid cooling channel is less than the second preset required flow velocity, it indicates that coolant leakage occurs in a process in which the liquid cooling device delivers the coolant to the electric vehicle. In this case, the charging device may stop delivering electric energy to the electric vehicle, to prevent damage to a power battery caused by the coolant flowing into the power battery, and further prolong a service life of the power battery. In addition, such a design in this application can further prevent damage to another component caused by the coolant flowing into the another component. This can reduce a possibility of damage to the electric vehicle, prolong a service life of the electric vehicle, and improve user experience.

It should be noted that, when coolant leakage occurs in the process in which the liquid cooling device delivers the coolant to the electric vehicle, a specific location of coolant leakage is not determined. It is possible that coolant leakage occurs in the liquid cooling channel of the liquid cooling device, or a liquid cooling channel of the electric vehicle, or both the liquid cooling channel of the liquid cooling device and the liquid cooling channel of the electric vehicle. In this application, it is designed that the charging device stops delivering electric energy to the electric vehicle, to help detect the liquid cooling channel of the liquid cooling device and the liquid cooling channel of the electric vehicle, so as to determine the specific location of coolant leakage, and repair or replace the liquid cooling channel. In this way, subsequent normal high-power charging of the electric vehicle by the charging device is ensured, so that reliability of charging the electric vehicle by the charging device can be further improved, and user experience is further improved.

With reference to the first aspect, in a possible design, when the charging device is connected to the electric vehicle, the charging device is further configured to: receive a packet for requesting the liquid cooling device to output the coolant to the electric vehicle; and send, to the liquid cooling device, the packet for requesting the liquid cooling device to output the coolant to the electric vehicle, and a packet for requesting the liquid cooling device to output the coolant to the charging device.

Based on the foregoing solution, both the packet for requesting the liquid cooling device to output the coolant to the electric vehicle and the packet for requesting the liquid cooling device to output the coolant to the charging device are managed by the charging device. In this way, communication between the liquid cooling device and the electric vehicle can be reduced, so that a process design of the liquid cooling device can be simplified.

With reference to the first aspect, in a possible design, the liquid cooling device includes M coolant inlets and M coolant outlets, the charging device includes M charging dispensers, the to-be-cooled component of each charging dispenser includes N chargers, and both M and N are integers greater than or equal to 1. The M coolant outlets are connected to coolant injection ports of the M charging dispensers in a one-to-one correspondence, and the M coolant inlets are connected to coolant return ports of the M charging dispensers in a one-to-one correspondence. The coolant injection port of the charging dispenser is connected to a coolant inlet of a liquid cooling channel of each of the N chargers; and the coolant return port of the charging dispenser is connected to a coolant outlet of the liquid cooling channel of each of the N chargers.

Based on the foregoing solution, because the M coolant outlets are connected to the coolant injection ports of the M charging dispensers in the one-to-one correspondence, and the M coolant inlets are connected to the coolant return ports of the M charging dispensers in the one-to-one correspondence, when at least some chargers of one or more charging dispensers are connected to the electric vehicle, the liquid cooling device may deliver the coolant to corresponding charging dispensers through coolant outlets connected to coolant injection ports of the one or more charging dispensers, to meet a heat dissipation requirement of each charging dispenser. In this way, it can be ensured as much as possible that each charging dispenser normally charges the electric vehicle, to improve reliability of charging the electric vehicle by the charging dispenser, and further improve user experience.

In addition, because the liquid cooling device includes the M coolant inlets and the M coolant inlets, quantities of the coolant inlets and the coolant outlets are small, and a design is simple and easy to implement.

With reference to the first aspect, in a possible design, each charging dispenser includes N two-way valves, and the N two-way valves are connected to the liquid cooling channels of the N chargers in a one-to-one correspondence. One valve port of each of the N two-way valves is connected to a coolant inlet of a corresponding liquid cooling channel, and the other valve port of each of the N two-way valves is connected to a coolant injection port of a corresponding charging dispenser.

Based on the foregoing solution, because each charging dispenser includes the N two-way valves, and the N two-way valves are connected to the liquid cooling channels of the N chargers in the one-to-one correspondence, it is equivalent to that the liquid cooling device and the liquid cooling channel of each charger are controlled by one two-way valve separately. When a charger of one of the M charging dispensers is connected to the electric vehicle, the charging dispenser can control a two-way valve connected to a liquid cooling channel of the charger to connect the liquid cooling channel between the liquid cooling device and the charger. The control is simple and easy to implement.

In addition, in this application, it is designed that a two-way valve is connected between the coolant injection port of the charging dispenser and the coolant inlet of the liquid cooling channel of each charger, so that costs can be reduced. In addition, compared with a solution in which the coolant injection port of the charging dispenser is connected to the coolant inlet of the liquid cooling channel of each charger through a multi-way valve, the solution of this application can resolve a problem that the valve may be loose or damaged because different valve ports of the multi-way valve are repeatedly switched and connected, and can further reduce costs.

With reference to the first aspect, in a possible design, the liquid cooling device includes M groups of coolant inlets and M groups of coolant outlets, each group of coolant inlets includes N coolant inlets, each group of coolant outlets includes N coolant outlets, the charging device includes M charging dispensers, the to-be-cooled component of each charging dispenser includes N chargers, and both M and N are integers greater than or equal to 1. The M groups of coolant outlets are connected to the M charging dispensers in a one-to-one correspondence, the M groups of coolant inlets are connected to the M charging dispensers in a one-to-one correspondence, the N coolant outlets of each group of coolant outlets are connected to N coolant injection ports of one charging dispenser in a one-to-one correspondence, and the N coolant inlets of each group of coolant inlets are connected to N coolant return ports of one charging dispenser. The N coolant injection ports are connected to coolant inlets of liquid cooling channels of corresponding N chargers in a one-to-one correspondence, and the N coolant return ports are connected to coolant outlets of liquid cooling channels of corresponding N chargers in a one-to-one correspondence.

Based on the foregoing solution, because the M groups of coolant outlets are connected to the M charging dispensers in the one-to-one correspondence, and the M groups of coolant inlets are connected to the M charging dispensers in the one-to-one correspondence, when chargers of one or more charging dispensers are connected to the electric vehicle, the coolant is delivered to corresponding charging dispensers through a group of coolant outlets connected to the one or more charging dispensers in the liquid cooling device, to meet a heat dissipation requirement of each charging dispenser. In this way, it can be ensured as much as possible that each charging dispenser normally charges the electric vehicle, to improve reliability of charging the electric vehicle by the charging dispenser, and further improve user experience.

In addition, in the liquid cooling device, the each group of coolant outlets include the N coolant outlets, the M groups of coolant inlets include the N coolant inlets, the N coolant outlets of each group of coolant outlets are connected to the N coolant injection ports of the one charging dispenser in the one-to-one correspondence, and the N coolant inlets of each group of coolant inlets are connected to the N coolant return ports of the one charging dispenser. In this way, the liquid cooling device delivers the coolant to coolant inlets of liquid cooling channels of different liquid cooling supply connectors through different coolant outlets, the coolant flowing out of a coolant outlet of a liquid cooling channel of each liquid cooling supply connector flows into the liquid cooling device through different coolant inlets of the liquid cooling device, and even if leakage occurs at a coolant inlet/outlet of the liquid cooling device or a coolant inlet/outlet of the charging device, delivering the coolant by the liquid cooling device to liquid cooling channels of other chargers of the charging device through other coolant inlets/outlets is not affected. Therefore, reliability of overall heat dissipation performed by the liquid cooling device for the M charging dispensers can be improved.

With reference to the first aspect, in a possible design, a two-way valve is connected between the coolant outlet of the heat exchanger and each coolant outlet of the liquid cooling device.

In embodiments of this application, because the two-way valve is connected between the coolant outlet of the heat exchanger of the liquid cooling device and each coolant outlet of the liquid cooling device, the liquid cooling device can be controlled, by controlling different two-way valves, to deliver the coolant to corresponding charging devices through different coolant outlets of the liquid cooling device. The control is simple and easy to implement.

In addition, in this application, it is designed that the two-way valve is connected between each coolant outlet of the liquid cooling device and the coolant outlet of the heat exchanger of the liquid cooling device, so that costs can be reduced. In addition, compared with a solution in which the coolant outlet of the heat exchanger of the liquid cooling device is connected to each coolant outlet of the liquid cooling device through a multi-way valve, the solution of this application can resolve a problem that the valve may be loose or damaged because different valve ports of the multi-way valve are repeatedly switched and connected, and further reduce costs.

In addition, the two-way valve is connected between the coolant outlet of the heat exchanger of the liquid cooling device and each coolant outlet of the liquid cooling device. By controlling the two-way valve, a channel between the liquid cooling device and the charging dispenser can be disconnected, which facilitates maintenance of the liquid cooling device. In this way, reliability of delivering the coolant by the liquid cooling device to the charging dispenser can be improved, and reliability of performing high-power charging on the electric vehicle by the charging dispenser can be improved, to further improve user experience.

With reference to the first aspect, in a possible design, N is an integer greater than or equal to 2, and when a plurality of chargers in the N chargers are connected to electric vehicles, the charging dispenser is configured to send at least one of the following packets to the liquid cooling device: a packet for requesting the liquid cooling device to output the coolant, a packet indicating a total coolant flow rate required by the plurality of chargers, and a packet indicating a lowest coolant temperature required by the plurality of chargers.

Based on the foregoing solution, the charging dispenser sends at least one of the foregoing packets to the liquid cooling device, and the liquid cooling device may deliver the coolant with a corresponding parameter to the charging dispenser based on content of the packet. This helps meet a heat dissipation requirement of each charger, and further helps ensure normal high-power charging performed by the charging dispenser on the electric vehicle, to improve user experience.

In addition, in embodiments of this application, the packet sent by the charging dispenser to the liquid cooling device includes the packet indicating the total coolant flow rate required by the plurality of chargers, that is, the charging dispenser only needs to send one packet about the total coolant flow rate to the liquid cooling device. This can reduce packet complexity and improve transmission efficiency.

In addition, the packet sent by the charging dispenser to the liquid cooling device includes the packet indicating the lowest coolant temperature required by the plurality of chargers, that is, the charging dispenser only needs to send the packet indicating the lowest coolant temperature required by the plurality of chargers to the liquid cooling device. In this way, a temperature of the coolant output by the liquid cooling device to the charging dispenser can meet a heat dissipation requirement of each charger, and this can ensure normal high-power charging performed by the charging dispenser on the electric vehicle, to further improve user experience.

With reference to the first aspect, in a possible design, the charging device is further configured to control an opening degree of a valve port of the two-way valve corresponding to the liquid cooling channel of each of the plurality of chargers, so that a flow rate of the coolant flowing into the liquid cooling channel of each charger meets a flow rate requirement of the charger.

Based on the foregoing solution, the charging device may control the opening degree of the valve port of the two-way valve corresponding to the liquid cooling channel of each of the plurality of chargers, so that the flow rate of the coolant flowing into the liquid cooling channel of each charger meets the flow rate requirement of each charger. This can meet a heat dissipation requirement of each charger, and ensure normal high-power charging performed by the charging dispenser on the electric vehicle, to improve user experience.

With reference to the first aspect, in a possible design, N is an integer greater than or equal to 2, and when a plurality of chargers in the N chargers are connected to electric vehicles, the charging dispenser is configured to send at least one of the following packets to the liquid cooling device: a packet for requesting the liquid cooling device to output the coolant, a packet indicating a coolant flow rate required by each of the plurality of chargers, and a packet indicating a lowest coolant temperature required by the plurality of chargers.

Based on the foregoing solution, the charging dispenser sends at least one of the foregoing packets to the liquid cooling device, and the liquid cooling device may deliver the coolant with a corresponding parameter to the charging dispenser based on content of the packet. This helps meet a heat dissipation requirement of each charger, and further helps ensure normal high-power charging performed by the charging dispenser on the electric vehicle, to improve user experience.

In addition, in embodiments of this application, the packet sent by the charging dispenser to the liquid cooling device includes the packet indicating the coolant flow rate required by each of the plurality of chargers, that is, the charging dispenser sends the packet indicating the coolant flow rate required by each charger to the liquid cooling device. In this way, the liquid cooling device may deliver the coolant with a corresponding flow rate based on the coolant required by each charger. This is easy to implement.

In addition, the packet sent by the charging dispenser to the liquid cooling device includes the packet indicating the lowest coolant temperature required by the plurality of chargers, that is, the charging dispenser only needs to send the packet indicating the lowest coolant temperature required by the plurality of chargers to the liquid cooling device. In this way, a temperature of the coolant output by the liquid cooling device to the charging dispenser can meet a heat dissipation requirement of each charger, and this can ensure normal high-power charging performed by the charging dispenser on the electric vehicle, to further improve user experience.

### BRIEF DESCRIPTION OF DRAWINGS

FIG. 1 is a diagram of a structure of a charging system according to an embodiment of this application;
FIG. 2 is a diagram of an application scenario of a charging pile according to an embodiment of this application; and
FIG. 3 to FIG. 9 are diagrams of a charging pile according to an embodiment of this application.

### DESCRIPTION OF EMBODIMENTS

The following describes technical solutions of this application with reference to accompanying drawings.

In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

In embodiments of this application, prefix words such as "first" and "second" are used only to distinguish different described objects, and do not limit locations, a sequence, priorities, quantities, content, or the like of the described objects. In embodiments of this application, use of a prefix word, for example, an ordinal number, used to distinguish between described objects does not constitute a limitation on the described objects. For descriptions of the described objects, refer to the descriptions of the context in the claims or embodiments. The use of such a prefix word should not constitute a redundant limitation. In addition, in descriptions of embodiments, unless otherwise specified, "a plurality of" means two or more.

With development of new energy vehicle technologies, many vehicle manufacturers gradually launch electric vehicles. The electric vehicles have become a choice for many users because of energy conservation, environmental protection, and relatively mature technologies.

This application may be applied to a system in which a power supply apparatus and a load charge each other through a power distribution matrix. Particularly, in a system including a charging pile and an electric vehicle, the charging pile may charge the electric vehicle by using electric energy that comes from a power grid, and the electric vehicle may also reversely output electric energy of the electric vehicle to the power grid.

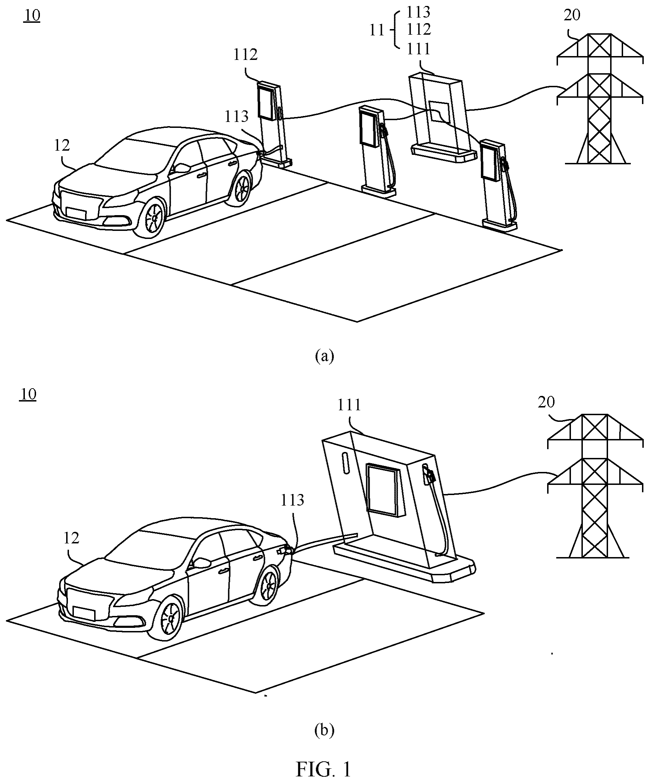

FIG. 1 is an example of a diagram of a structure of a charging system 10 according to an embodiment of this application.

With reference to (a) in FIG. 1 and (b) in FIG. 1, the charging system 10 may include a charging device 11 and an electric vehicle 12. The charging device 11 may be configured to: receive an alternating current output by an external power grid 20, convert the alternating current into a stable direct current, and then deliver the stable direct current to the electric vehicle 12, to charge the electric vehicle 12. Alternatively, the electric vehicle 12 may reversely output electric energy to the external power grid 20.

In some embodiments, as shown in (a) in FIG. 1, the charging device 11 is a split charging pile. Specifically, the charging device 11 may include a power unit 111, at least one charging dispenser 112, and at least one charger 113. The power unit 111 includes a plurality of charging modules (not shown in the figure), and output ends of the plurality of charging modules are connected to the at least one charging dispenser 112. The at least one charging dispenser 112 is connected to the at least one charger 113, and each charger 113 is configured to connect to the electric vehicle 12. For example, one charging dispenser 112 may be connected to one or more chargers 113, and the one or more chargers 113 may be connected to the same electric vehicle 12.

The charging module may include, for example, a plurality of power conversion apparatuses. The plurality of power conversion apparatuses may convert the alternating current that comes from the external power grid 20 into a stable direct current, and then deliver the stable direct current to the charging dispenser 112. The plurality of power conversion apparatuses may include, for example, an alternating current-direct current (alternating current-direct current, AC-DC) conversion apparatus and a direct current-direct current (direct current-direct current, DC-DC) conversion apparatus. The charging dispenser 112 delivers the stable direct current to the electric vehicle 12 via the charger 113, to charge the electric vehicle 12.

In an example, the charging dispenser 112 further includes a power distribution component (not shown in the figure), and the charger 113 includes a charging cable and a charger head. The output ends of the plurality of charging modules in the power unit 111 are connected to one end of the charging cable via the power distribution component, and the other end of the charging cable is connected to the charger head. The charger head is configured to connect to a charging port of the electric vehicle 12. In this way, the direct current output by the plurality of charging modules is delivered to the electric vehicle 12 via the charger 113.

For example, the power distribution component includes a contactor, a shunt, a fuse, and the like, to perform on-off control, current detection, overcurrent protection, and the like on a circuit. In addition, the power distribution component may further include a copper bar. The copper bar is connected to the output ends of the plurality of charging modules in the power unit 111 and one end of the charging cable in the charger 113, to implement electrical connection between the plurality of charging modules and the charger 113.

The charging dispenser 112 may include a housing, a human-machine interaction interface, a charging control unit, a metering and billing unit, and the like, and is configured to perform information exchange, energy delivery, metering and billing, and the like with the electric vehicle 12.

The electric vehicle 12 may be a transportation means driven by using electric energy to travel. The electric vehicle 12 may be a pure electric vehicle (pure electric vehicle/battery electric vehicle, pure EV/battery EV), a hybrid electric vehicle (hybrid electric vehicle, HEV), a range extended electric vehicle (range extended electric vehicle, REEV), a plug-in hybrid electric vehicle (plug-in hybrid electric vehicle, PHEV), or the like.

In some other embodiments, as shown in (b) in FIG. 1, the charging device 11 is an integrated charging pile. Specifically, a human-machine interaction interface, a charging control unit, a metering and billing unit, and the like may be directly disposed in a power unit 111 in the charging device 11, so that the charging device 11 may include only the power unit 111 and at least one charger 113 electrically connected to the power unit 111, but does not include a charging dispenser 112. A plurality of power conversion apparatuses in the power unit 111 may convert the alternating current that comes from the external power grid 20 into a stable direct current, and then directly deliver the stable direct current to the electric vehicle 12 via the charger 113.

As described above, as the charging device 11 continuously evolves to an ultra-fast charging device, a charging power output by a plurality of charging modules in the power unit 111 to the electric vehicle 12 via the charger 113 continuously increases, to implement ultra-fast charging on a power battery of the electric vehicle 12. However, as the charging power continuously increases, heat generated by the electric vehicle 12 increases accordingly. If the heat cannot be discharged in a timely manner, a temperature of the electric vehicle 12 increases. However, an excessively high temperature is prone to affect normal high-power charging of the electric vehicle 12, and consequently causes decreases in efficiency and safety of charging the electric vehicle 12.

In view of this, this application provides a charging pile. A liquid cooling device in the charging pile may provide required coolant for an electric vehicle, to dissipate heat for the electric vehicle, so that a heat dissipation requirement of the electric vehicle during high-power charging can be met, thereby improving efficiency and safety of charging the electric vehicle.

The following describes the charging pile provided in embodiments of this application with reference to the accompanying drawings.

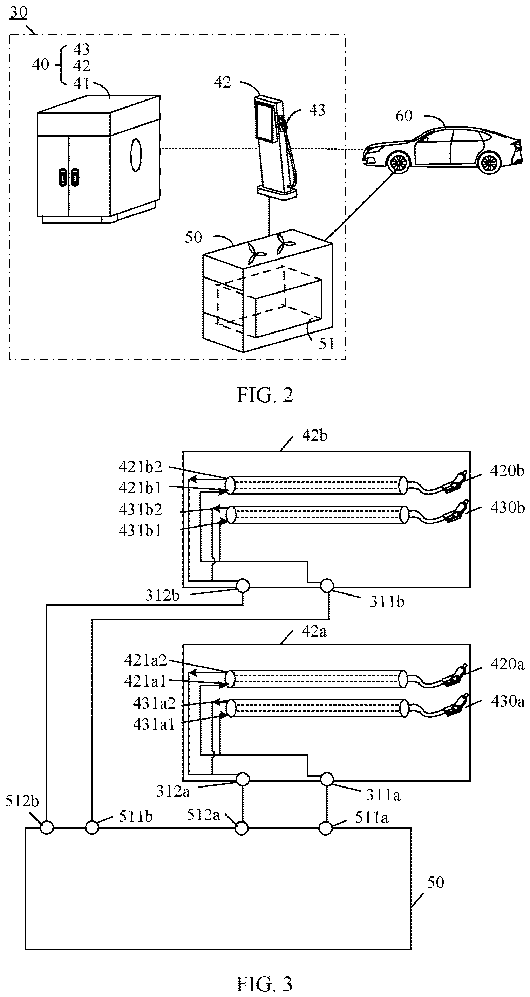

FIG. 2 is a diagram of an application scenario of a charging pile 30 according to an embodiment of this application. It should be noted that, for ease of understanding, in FIG. 2, a solid line indicates liquid cooling channel connection, and a dashed line indicates power connection.

Refer to FIG. 2. The charging pile 30 includes a charging device 40 and a liquid cooling device 50. The charging device 40 is configured to charge an electric vehicle 60, and the liquid cooling device 50 is configured to dissipate heat for the charging device 40 and the electric vehicle 60 when the charging device 40 charges the electric vehicle 60.

It should be understood that, in this embodiment of this application, the charging device 40 may be the split charging device shown in (a) in FIG. 1. To be specific, the charging device 40 includes a power unit 41, a charging dispenser 42, and a charger 43 shown in FIG. 2. Alternatively, the charging device 40 may be the integrated charging device shown in (b) in FIG. 1. To be specific, the charging dispenser 42 may be integrated into the power unit 41, so that the charging device 40 includes only the power unit 41 and the charger 43. For specific descriptions of the charging device 40, refer to related descriptions of the embodiment in FIG. 1. Details are not described herein again.

It should be further understood that, in this embodiment of this application, the liquid cooling device 50 may be separately disposed outside the charging device 40, as shown in FIG. 2. Alternatively, the liquid cooling device may be disposed inside the charging device 40, for example, disposed inside the charging dispenser 42 of the charging device 40 (not shown in the figure).

In an embodiment, refer to FIG. 2. The liquid cooling device 50 includes a heat exchanger 51, a coolant inlet and a coolant outlet of the heat exchanger 51 are connected to a liquid cooling channel of a to-be-cooled component in the charging device 40 to form a coolant supply loop, the liquid cooling device 50 further includes a liquid cooling connector, the liquid cooling connector is configured to connect to a liquid cooling port of the electric vehicle 60, and the liquid cooling device 50 is configured to output coolant to the electric vehicle 60 through the liquid cooling connector.

In this embodiment of this application, in a process of charging the electric vehicle 60 by the charging device 40, the liquid cooling device 50 may deliver the coolant to the electric vehicle 60 through the liquid cooling connector. The coolant may absorb heat generated in the process of charging the electric vehicle 60, to implement liquid cooling heat dissipation for the electric vehicle 60. This can meet a heat dissipation requirement of high-power charging of the electric vehicle 60 and facilitate normal high-power charging of the electric vehicle 60, to improve efficiency and safety of charging the electric vehicle 60.

The charging device 40 is configured to deliver electric energy to the electric vehicle 60 when receiving a packet indicating that the liquid cooling device 50 has delivered the coolant to the electric vehicle 60.

In this embodiment of this application, after the charger 43 is connected to the electric vehicle 60, and the electric vehicle 60 completes a series of preparation actions before charging, both the electric vehicle 60 and the charging device 40 send packets about respective required coolant to the liquid cooling device 50. After receiving the corresponding packets, the liquid cooling device 50 may first deliver the coolant with a corresponding parameter to the electric vehicle 60, and sends, to the charging device 40, the packet indicating that the liquid cooling device 50 has delivered the coolant to the electric vehicle 60. The charging device 40 delivers electric energy to the electric vehicle 60 only after receiving the packet indicating that the liquid cooling device 50 has delivered the coolant to the electric vehicle 60. This can ensure that the electric vehicle 60 is charged only under a condition that the electric vehicle 60 has a heat dissipation capability, to prevent a charging exception that may occur when the electric vehicle 60 has been in a charging state but the liquid cooling device 50 cannot deliver the coolant to the electric vehicle 60 in a timely manner. In this way, the efficiency and safety of charging the electric vehicle 60 can be further improved.

Specifically, if the liquid cooling device 50 delivers the coolant to the electric vehicle 60 only after the charging device 40 has delivered the electric energy to the electric vehicle 60, it is possible that the coolant cannot be delivered in a timely manner. In this case, the charging device 40 continuously delivers electric energy to the electric vehicle 60, and heat of a power battery of the electric vehicle continuously increases accordingly. The liquid cooling device 50 does not deliver the coolant to the electric vehicle 60 in a timely manner, resulting in a continuous increase of a temperature of the power battery, to affect normal high-power charging of the electric vehicle 60. Therefore, in this application, it is designed that the charging device 40 delivers electric energy to the electric vehicle 60 only after receiving the packet indicating that the electric vehicle 60 has delivered the coolant, so that efficiency and safety of charging the electric vehicle can be improved.

It may be understood that, in this embodiment of this application, the charging device 40 may be further configured to: deliver electric energy to the electric vehicle 60 when it is detected that the coolant has flowed through the charging device 40. This can ensure that the charging device 40 delivers electric energy to the electric vehicle only after the charging device 40 has the heat dissipation capability, to prevent a charging exception that may occur because the charging device 40 has delivered electric energy to the electric vehicle but the liquid cooling device 50 cannot deliver the coolant to the charging device in a timely manner. In this way, charging efficiency and safety of the charging device 40 can be improved.

Specifically, if the liquid cooling device 50 delivers the coolant to the charging device 40 only after the charging device 40 has delivered electric energy to the electric vehicle 60, it is possible that the coolant cannot be delivered in a timely manner. In this case, the charging device 40 continuously delivers electric energy to the electric vehicle 60, and heat of the charging device 40 continuously increases accordingly. The liquid cooling device 50 does not deliver the coolant to the charging device 40 in a timely manner, resulting in a continuous increase of a temperature of the charging device 40, to affect normal high-power charging of the charging device 40. Therefore, in this application, it is designed that the charging device 40 delivers electric energy to the electric vehicle 60 only after it is detected that the coolant has flowed through the charging device 40, so that the charging efficiency and safety of the charging device 40 can be improved.

To further improve reliability of charging the electric vehicle 60 by the charging device 40, in this application, a pressure or a flow velocity of a liquid cooling channel may be further detected, and a corresponding action is performed based on whether the pressure or the flow velocity of the liquid cooling channel reaches a corresponding preset required parameter.

In an embodiment, when the liquid cooling device 50 delivers the coolant to the charging device 40, and a pressure of the liquid cooling channel is less than a first preset required pressure, or a flow velocity of the liquid cooling channel is less than a first preset required flow velocity, a power for delivery to the electric vehicle 60 is reduced, and a packet indicating to stop coolant delivery is sent to the liquid cooling device 50.

The first preset required pressure is a pressure corresponding to the liquid cooling channel when the charging device 40 charges the electric vehicle 60 at a power required by the electric vehicle 60 and the liquid cooling device 50 delivers the coolant to the charging device 40 at a coolant flow rate required by the charging device 40; and the first preset required flow velocity is a flow velocity corresponding to the liquid cooling channel when the charging device 40 charges the electric vehicle 60 at the power required by the electric vehicle 60 and the liquid cooling device 50 delivers the coolant to the charging device 40 at the coolant flow rate required by the charging device 40.

A pressure of the liquid cooling channel is used as an example. It is assumed that when the charging device 40 charges the electric vehicle 60 at a power W, and the liquid cooling device 50 delivers the coolant to the charging device 40 at a coolant flow rate required by the charging device 40, the pressure of the liquid cooling channel is a first preset required pressure P1. When the pressure of the liquid cooling channel is P1', and P1' < P1, it indicates that coolant leakage occurs in a process in which the liquid cooling device 50 delivers the coolant to the charging device 40. If the charging device 40 continues to charge the electric vehicle 60 at the power W, the coolant delivered by the liquid cooling device 50 cannot meet the heat dissipation requirement of the charging device 40 due to coolant leakage. Consequently, normal charging of the electric vehicle 60 by the charging device 40 is affected, and seriously, the charging device 40 may be damaged.

Therefore, when the pressure of the liquid cooling channel is less than the first preset required pressure of the liquid cooling channel, or the flow velocity of the liquid cooling channel is less than the first preset required flow velocity of the liquid cooling device, the charging device 40 may reduce the power for delivery to the electric vehicle 60 and send, to the liquid cooling device 50, the packet indicating to stop coolant delivery. As the power decreases, the heat dissipation requirement of the charging device 40 decreases, and the charging device 40 may send, to the liquid cooling device 50, the packet indicating to stop coolant delivery. In this way, the liquid cooling device 50 stops delivering the coolant to the charging device 40. In this case, heat of the charging device 40 is naturally discharged to a current environment, to implement heat dissipation of the liquid cooling device 50. For the electric vehicle 60, because the charging power of the electric vehicle 60 is reduced, heat dissipation may be performed by using a heat management system of the electric vehicle, to meet the heat dissipation requirement of the electric vehicle 60. In this way, it is ensured as much as possible that the charging device 40 normally charges the electric vehicle 60, to improve reliability of charging the electric vehicle 60 by the charging device 40, and further improve user experience.

In addition, when coolant leakage occurs in the process in which the liquid cooling device 50 delivers the coolant to the charging device 40, a specific location of coolant leakage is not determined. In this application, it is designed that the liquid cooling device 50 stops delivering the coolant to the charging device 40, so that the liquid cooling channel of the liquid cooling device 50 and the liquid cooling channel of the charging device 40 can be detected, to determine the specific location of coolant leakage, and repair or replace the liquid cooling channel. In this way, subsequent normal high-power charging of the electric vehicle 60 by the charging device 40 is ensured, so that reliability of charging the electric vehicle 60 by the charging device 40 can be further improved, and user experience is further improved. In addition, when coolant leakage occurs, the coolant of the liquid cooling device 50 may leak. In this case, the liquid cooling device 50 may stop delivering the coolant to the electric vehicle 60, to prevent further leakage of the coolant of the liquid cooling device 50.

In consideration of a charging requirement of a user, after current charging ends, the liquid cooling channel of the liquid cooling device 50 and the liquid cooling channel of the charging device 40 may be detected. This can meet a current charging requirement of the user, and further resolve a problem of coolant leakage that occurs when the liquid cooling channel is detected in a process of charging the electric vehicle 60, to further ensure normal current charging of the electric vehicle 60, improve reliability of charging the electric vehicle 60 by the charging device 40, and improve user experience.

During specific implementation, a water pump may be disposed between the liquid cooling device 50 and the liquid cooling channel of the to-be-cooled component in the charging device 40. Whether leakage occurs in the liquid cooling channel that delivers the coolant to the to-be-cooled component is determined by detecting a pressure or a flow velocity of the water pump. Therefore, when the liquid cooling channel leaks, the charging device 40 may reduce the power for delivery to the electric vehicle 60 and send, to the liquid cooling device 50, the packet indicating to stop coolant delivery. In this way, it is ensured as much as possible that the charging device 40 normally charges the electric vehicle 60, to improve reliability of charging the electric vehicle 60 by the charging device 40, and further improve user experience.

In an embodiment, the charging pile 30 is configured to: when the liquid cooling device 50 delivers the coolant to the electric vehicle 60, and a pressure of a liquid cooling channel between the liquid cooling device 50 and the electric vehicle 60 is less than a second preset required pressure, or a flow velocity of a liquid cooling channel between the liquid cooling device 50 and the electric vehicle 60 is less than a second preset required flow velocity, stop delivering electric energy to the electric vehicle 60.

The second preset required pressure is a pressure corresponding to the liquid cooling channel between the liquid cooling device 50 and the electric vehicle 60 when the charging device 40 charges the electric vehicle 60 at the power required by the electric vehicle 60 and the liquid cooling device 50 delivers the coolant to the electric vehicle 60 at a coolant flow rate required by the electric vehicle 60; and the second preset required flow velocity is a flow velocity corresponding to the liquid cooling channel between the liquid cooling device 50 and the electric vehicle 60 when the charging device 40 charges the electric vehicle 60 at the power required by the electric vehicle 60 and the liquid cooling device 50 delivers the coolant to the electric vehicle 60 at the coolant flow rate required by the electric vehicle 60.

A flow velocity of the liquid cooling channel is used as an example. It is assumed that when the charging device 40 charges the electric vehicle 60 at the power W, and the liquid cooling device 50 delivers the coolant to the electric vehicle 60 at a coolant flow rate required by the electric vehicle 60, a flow velocity of the liquid cooling channel is a second preset required flow velocity V2. When the flow velocity of the liquid cooling channel is V2', and V2' < V2, it indicates that coolant leakage occurs in a process in which the liquid cooling device 50 delivers the coolant to the electric vehicle 60. If the charging device 40 continues to charge the electric vehicle 60 at the power W, the coolant delivered by the liquid cooling device 50 cannot meet the heat dissipation requirement of the electric vehicle 60 due to coolant leakage, and seriously, when the liquid cooling channel inside the electric vehicle is damaged, coolant leakage may damage the power battery, resulting in shortening a service life of the power battery.

It should be noted that, when coolant leakage occurs in the process in which the liquid cooling device 50 delivers the coolant to the electric vehicle 60, a specific location of coolant leakage is not determined. It is possible that coolant leakage occurs in the liquid cooling channel of the liquid cooling device 50, or a liquid cooling channel of the electric vehicle 60, or both the liquid cooling channel of the liquid cooling device 50 and the liquid cooling channel of the electric vehicle 60. In this application, it is designed that the charging device 40 stops delivering electric energy to the electric vehicle 60, to prevent a problem that a component of the electric vehicle is damaged due to leakage of the coolant in the electric vehicle.

During specific implementation, a water pump may be disposed between the liquid cooling device 50 and the electric vehicle 60. Whether leakage occurs in the liquid cooling channel that delivers the coolant to the electric vehicle is determined by detecting a pressure or a flow velocity of the water pump. Therefore, when the liquid cooling channel leaks, the charging device 40 may stop delivering electric energy to the electric vehicle 60, to prevent damage to the power battery caused by the coolant flowing into the power battery, and further prolong a service life of the power battery.

As mentioned above, both the electric vehicle 60 and the charging device 40 may send packets about respective required coolant to the liquid cooling device 50, and the liquid cooling device 50 performs a corresponding action after receiving a corresponding packet. A packet about the coolant that is sent by the electric vehicle 60 may be forwarded to the liquid cooling device 50 via the charging device 40.

In an embodiment, when the charging device 40 is connected to the electric vehicle 60, the charging device 40 is further configured to: receive a packet for requesting the liquid cooling device 50 to output the coolant to the electric vehicle 60, and send, to the liquid cooling device 50, the packet for requesting the liquid cooling device 50 to output the coolant to the electric vehicle 60, and a packet for requesting the liquid cooling device 50 to output the coolant to the charging device 40.

Specifically, if the electric vehicle 60 needs to request the liquid cooling device 50 to deliver the coolant to the electric vehicle 60, the electric vehicle 60 may send, to the charging device 40, the packet for requesting the liquid cooling device 50 to output the coolant to the electric vehicle 60, and the charging device 40 forwards the packet to the liquid cooling device 50. In this way, the liquid cooling device 50 delivers corresponding coolant to the electric vehicle 60 based on the coolant requested in the packet. Because the charging device 40 further sends, to the liquid cooling device 50, the packet for requesting the coolant for the charging device 40, it is equivalent to that both the packet for requesting the coolant for the electric vehicle 60 and the packet for requesting the coolant for the charging device 40 are managed by the charging device 40. In this way, communication between the liquid cooling device 50 and the electric vehicle 60 can be reduced, so that a process design of the liquid cooling device 50 can be simplified.

The following describes a specific connection between the liquid cooling device 50 and the charging dispenser.

In an embodiment, the liquid cooling device includes M coolant inlets and M coolant outlets, the charging device includes M charging dispensers, the to-be-cooled component of each charging dispenser includes N chargers, and both M and N are integers greater than or equal to 1.

The M coolant outlets are connected to coolant injection ports of the M charging dispensers in a one-to-one correspondence, and the M coolant inlets are connected to coolant return ports of the M charging dispensers in a one-to-one correspondence. For example, M is 2 and N is 2. Refer to FIG. 3. The liquid cooling device 50 includes two coolant inlets and two coolant outlets, where the two coolant outlets are a coolant outlet 511a and a coolant outlet 511b, and the two coolant inlets are a coolant inlet 512a and a coolant inlet 512b. The charging device 40 includes two charging dispensers, and the two charging dispensers are charging dispensers 42a and 42b, respectively. The coolant outlet 511a is connected to a coolant injection port 311a of the charging dispenser 42a, and the coolant inlet 512a is connected to a coolant return port 312a of the charging dispenser 42a. The coolant outlet 511b is connected to a coolant injection port 311b of the charging dispenser 42b, and the coolant inlet 512b is connected to a coolant return port 312b of the charging dispenser 42b.

In this embodiment of this application, the coolant injection port of the charging dispenser 42 is connected to a coolant inlet of a liquid cooling channel of each of the N chargers 43, and the coolant return port of the charging dispenser 42 is connected to a coolant outlet of the liquid cooling channel of each of the N chargers 43.

Still refer to FIG. 3. The charging dispenser 42a includes two chargers 420a and 430a. The coolant injection port 311a of the charging dispenser 42a is connected to a coolant inlet 421a1 of a liquid cooling channel of the charger 420a and a coolant inlet 431a1 of a liquid cooling channel of the charger 430a. The coolant return port 312a of the charging dispenser 42a is connected to a coolant outlet 421a2 of the liquid cooling channel of the charger 420a and a coolant outlet 431a2 of the liquid cooling channel of the charger 430a.

The charging dispenser 42b includes two chargers 420b and 430b. The coolant injection port 311b of the charging dispenser 42b is connected to a coolant inlet 421b1 of a liquid cooling channel of the charger 420b and a coolant inlet 431b1 of a liquid cooling channel of the charger 430b. The coolant return port 312b of the charging dispenser 42b is connected to a coolant outlet 421b2 of the liquid cooling channel of the charger 420b and a coolant outlet 431b2 of the liquid cooling channel of the charger 430b.

In this embodiment of this application, in a process in which the charging device 40 charges the electric vehicle, the liquid cooling device 50 may deliver the coolant to the charging dispenser of the charging device 40. For example, the charger 420a of the charging dispenser 42a is connected to the electric vehicle. In this example, the charger 420a may deliver electric energy to the electric vehicle. In this case, the liquid cooling device 50 may deliver the coolant to the liquid cooling channel of the charger 420a, and deliver, through the coolant inlet 512a connected to the coolant return port 312a of the charging dispenser 42a, the coolant that absorbs heat of the charging dispenser 42a. The coolant that absorbs the heat flows into the liquid cooling device 50. The coolant that absorbs the heat may be cooled inside the liquid cooling device 50, and the cooled coolant flows into the charging dispenser 42a through the coolant outlet 511a of the liquid cooling device 50. In this way, the charging dispenser 42a is cooled.

Specifically, in a process in which the liquid cooling device 50 delivers the coolant to the liquid cooling channel of the charger 420a, a flow direction of the coolant may be as follows: coolant outlet 511a->coolant injection port 311a of the charging dispenser 42a->coolant inlet 421al of the liquid cooling channel of the charger 420a->coolant outlet 421a2 of the liquid cooling channel of the charger 420a->coolant return port 312a of the charging dispenser 42a->coolant inlet 512a.

When the chargers 420a and 430a of the charging dispenser 42a are connected to the electric vehicle, the liquid cooling device 50 may deliver the coolant to the liquid cooling channels of the chargers 420a and 430a. For the flow direction of the coolant delivered by the liquid cooling device 50 to the liquid cooling channel of the charger 420a, refer to the foregoing description. A flow direction of the coolant delivered by the liquid cooling device 50 to the liquid cooling channel of the charger 430a may be as follows: coolant outlet 511a->coolant injection port 311a of the charging dispenser 42a->coolant inlet 431al of the liquid cooling channel of the charger 430a->coolant outlet 431a2 of the liquid cooling channel of the charger 430a->coolant return port 312a of the charging dispenser 42a->coolant inlet 512a.

In a possible implementation, the charger 420a of the charging dispenser 42a and the charger 420b of the charging dispenser 42b are connected to the electric vehicle, that is, both the chargers 420a and 420b deliver electric energy to the electric vehicle. In this case, the liquid cooling device 50 may deliver the coolant to the liquid cooling channels of the chargers 420a and 420b. The liquid cooling device 50 delivers the coolant to the liquid cooling channel of the charger 420a. The coolant that absorbs the heat of the charging dispenser 42a is delivered through the coolant inlet 512a connected to the coolant return port 312a of the charging dispenser 42a. The coolant that absorbs the heat flows into the liquid cooling device 50. The coolant that absorbs the heat may be cooled inside the liquid cooling device 50, and the cooled coolant flows into the charging dispenser 42a through the coolant outlet 511a of the liquid cooling device 50. In this way, the charging dispenser 42a is cooled. The liquid cooling device 50 delivers the coolant to the liquid cooling channel of the charger 420b. The coolant that absorbs the heat of the charging dispenser 42b is delivered through the coolant inlet 512b connected to the coolant return port 312b of the charging dispenser 42b. The coolant that absorbs the heat flows into the liquid cooling device 50. The coolant that absorbs the heat may be cooled inside the liquid cooling device 50, and the cooled coolant flows into the charging dispenser 42b through the coolant outlet 511b of the liquid cooling device 50. In this way, the charging dispenser 42b is cooled.

Specifically, in a process in which the liquid cooling device 50 delivers the coolant to the liquid cooling channel of the charger 420a, for a flow direction of the coolant, refer to the foregoing description. Details are not described again.

In a process in which the liquid cooling device 50 delivers the coolant to the liquid cooling channel of the charger 420b, a flow direction of the coolant may be as follows: coolant outlet 511b->coolant injection port 311b of the charging dispenser 42b->coolant inlet 421b1 of the liquid cooling channel of the charger 420b->coolant outlet 421b2 of the liquid cooling channel of the charger 420b->coolant return port 312b of the charging dispenser 42b->coolant inlet 512b.

Based on the foregoing solution, because the M coolant outlets are connected to the coolant injection ports of the M charging dispensers in the one-to-one correspondence, and the M coolant inlets are connected to the coolant return ports of the M charging dispensers in the one-to-one correspondence, when at least some chargers of one or more charging dispensers are connected to the electric vehicle, the liquid cooling device 50 may deliver the coolant to corresponding charging dispensers through coolant outlets connected to coolant injection ports of the one or more charging dispensers, to meet a heat dissipation requirement of each charging dispenser. In this way, it can be ensured as much as possible that each charging dispenser normally charges the electric vehicle, to improve reliability of charging the electric vehicle by the charging dispenser, and further improve user experience.

In addition, because the liquid cooling device includes the M coolant inlets and the M coolant inlets, quantities of the coolant inlets and the coolant outlets are small, and a design is simple and easy to implement.

It should be understood that in some possible implementations, the liquid cooling device may alternatively include one coolant outlet and one coolant inlet. The one coolant outlet is connected to coolant injection ports of a plurality of charging dispensers through a multi-way valve, and the one coolant inlet is connected to coolant return ports of the plurality of charging dispensers through the multi-way valve. When a charger of a specific charging dispenser is connected to the electric vehicle, connection between a valve port of the multi-way valve connected to the charging dispenser and a valve port connected to the liquid cooling device is controlled, so that the liquid cooling device can deliver the coolant to the charging dispenser to dissipate heat for the charging dispenser.

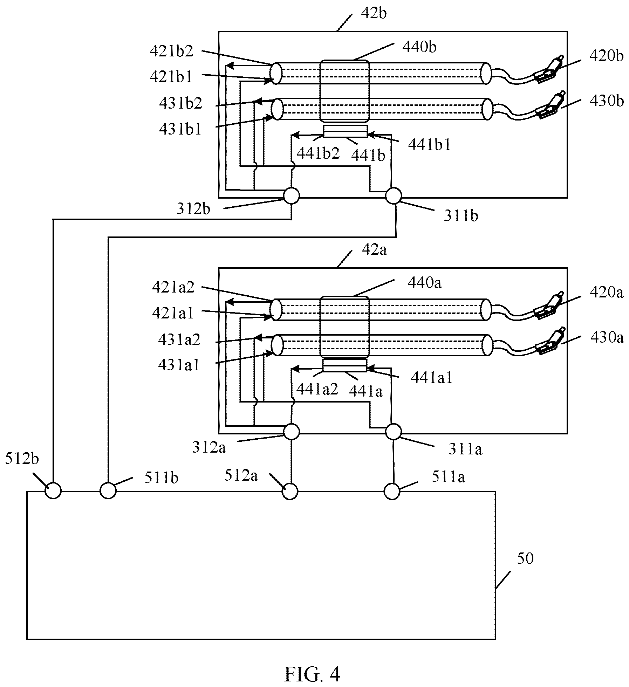

It should be noted that, in an embodiment, as shown in FIG. 4, each charging dispenser further includes a power distribution component and a heat exchanger. The power distribution component is connected between the charger and the charging module. The heat exchanger of the charging dispenser includes a liquid cooling channel and a gas channel. The liquid cooling channel of the heat exchanger of the charging dispenser is configured to exchange heat with the gas channel.

Specifically, refer to FIG. 4. The charging dispenser 42a further includes one power distribution component 440a and a heat exchanger 441a, and a liquid cooling channel of the heat exchanger 441a is configured to dissipate heat for gas in the power distribution component 440a. The coolant injection port 311a of the charging dispenser 42a is also connected to a coolant inlet 441a1 of the liquid cooling channel of the heat exchanger 441a. The coolant return port 312a of the charging dispenser 42a is also connected to a coolant outlet 441a2 of the liquid cooling channel of the heat exchanger 441a.

The charging dispenser 42b further includes one power distribution component 440b and a heat exchanger 441b. The heat exchanger 441b includes a liquid cooling channel and a gas channel. The liquid cooling channel is configured to exchange heat with the gas channel. The coolant injection port 311b of the charging dispenser 42b is also connected to a coolant inlet 441b1 of the liquid cooling channel of the heat exchanger 441b. The coolant return port 312b of the charging dispenser 42b is also connected to a coolant outlet 441b2 of the liquid cooling channel of the heat exchanger 441b.

In this embodiment of this application, in a process in which the charging device 40 charges the electric vehicle, the liquid cooling device 50 may deliver the coolant to the charging dispenser of the charging device 40. For example, the charger 420a of the charging dispenser 42a is connected to the electric vehicle. In this example, the charger 420a may deliver electric energy to the electric vehicle. In this case, the liquid cooling device 50 may deliver the coolant to the liquid cooling channel of the charger 420a and the liquid cooling channel of the heat exchanger 441a, and deliver, through the coolant inlet 512a connected to the coolant return port 312a of the charging dispenser 42a, the coolant that absorbs heat of the charging dispenser 42a. The coolant that absorbs the heat flows into the liquid cooling device 50. The coolant that absorbs the heat may be cooled inside the liquid cooling device 50, and the cooled coolant flows into the charging dispenser 42a through the coolant outlet 511a of the liquid cooling device 50. In this way, the charging dispenser 42a is cooled.

Specifically, in a process in which the liquid cooling device 50 delivers the coolant to the liquid cooling channel of the charger 420a, for a flow direction of the coolant, refer to the foregoing description. Details are not described again.

In a process in which the liquid cooling device 50 delivers the coolant to the liquid cooling channel of the heat exchanger 441a, a flow direction of the coolant may be as follows: coolant outlet 511a->coolant injection port 311a of the charging dispenser 42a->coolant inlet 441al of the liquid cooling channel of the heat exchanger 441a->coolant outlet 441a2 of the liquid cooling channel of the heat exchanger 441a->coolant return port 312a of the charging dispenser 42a->coolant inlet 512a.

In this embodiment of this application, each charging dispenser further includes a power distribution component and a heat exchanger, and the heat exchanger of the charging dispenser includes a liquid cooling channel and a gas channel. In this way, the liquid cooling device 50 may deliver the coolant to the liquid cooling channel of the heat exchanger of the charging dispenser, and the coolant may take away heat of the gas channel of the heat exchanger of the charging dispenser, to dissipate heat for the power distribution component. This can prevent damage to the power distribution component due to overtemperature of the power distribution component, and prolong a service life of the power distribution component.

In an embodiment, each charging dispenser includes N two-way valves, and the N two-way valves are connected to the liquid cooling channels of the N chargers in a one-to-one correspondence. One valve port of each of the N two-way valves is connected to a coolant inlet of a corresponding liquid cooling channel, and the other valve port of each of the N two-way valves is connected to a coolant injection port of a corresponding charging dispenser.

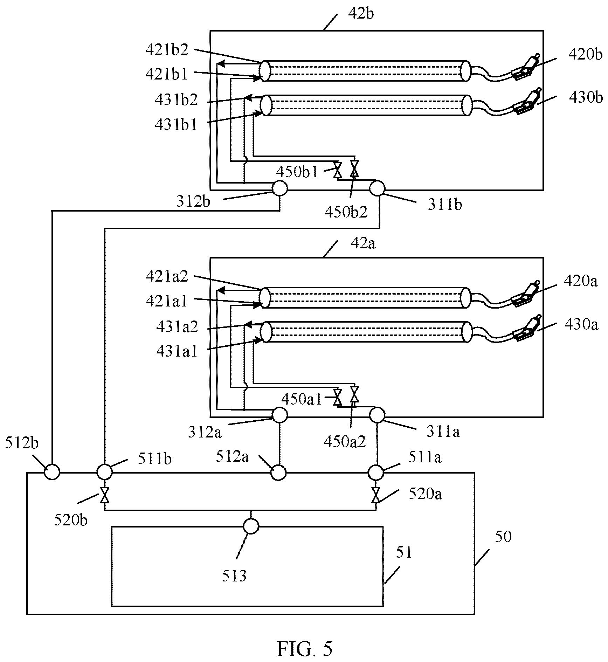

Refer to FIG. 5. Each of the charging dispensers 42a and 42b includes two two-way valves. The two two-way valves included in the charging dispenser 42a are two-way valves 450al and 450a2, respectively. A valve port of the two-way valve 450al is connected to the coolant inlet 421a1 of the liquid cooling channel of the charger 420a, and the other valve port of the two-way valve 450al is connected to the coolant injection port 311a. In other words, the two-way valve 450a1 is connected between the coolant injection port 311a and the coolant inlet 421al of the liquid cooling channel of the charger 420a. A valve port of the two-way valve 450a2 is connected to the coolant inlet 431al of the liquid cooling channel of the charger 430a, and the other valve port of the two-way valve 450a2 is connected to the coolant injection port 311a. In other words, the two-way valve 450a2 is connected between the coolant injection port 311a and the coolant inlet 431al of the liquid cooling channel of the charger 430a.

The two two-way valves included in the charging dispenser 42b are two-way valve 450b1 and 450b2, respectively. A valve port of the two-way valve 450b1 is connected to the coolant inlet 421b1 of the liquid cooling channel of the charger 420b, and the other valve port of the two-way valve 450b1 is connected to the coolant injection port 311b. In other words, the two-way valve 450b1 is connected between the coolant injection port 311b and the coolant inlet 421b1 of the liquid cooling channel of the charger 420b. A valve port of the two-way valve 450b2 is connected to the coolant inlet 431b1 of the liquid cooling channel of the charger 430b, and the other valve port of the two-way valve 450b2 is connected to the coolant injection port 311b. In other words, the two-way valve 450b2 is connected between the coolant injection port 311b and the coolant inlet 431b1 of the liquid cooling channel of the charger 430b.

In this embodiment of this application, because each charging dispenser includes the N two-way valves, and the N two-way valves are connected to the liquid cooling channels of the N chargers in the one-to-one correspondence, it is equivalent to that the liquid cooling device 50 and the liquid cooling channel of each charger are controlled by one two-way valve separately. When a charger of one of the M charging dispensers is connected to the electric vehicle, the charging dispenser can control a two-way valve connected to a liquid cooling channel of the charger to connect the liquid cooling channel between the liquid cooling device 50 and the charger. The control is simple and easy to implement.

For example, when the charger 420a of the charging dispenser 42a is connected to the electric vehicle, that is, when the charger 420a delivers electric energy to the electric vehicle, the charging dispenser 42a controls the two-way valve 450al to connect the liquid cooling channel between the liquid cooling device 50 and the charger 420a. In this case, the liquid cooling device 50 may deliver the coolant to the liquid cooling channel of the charger 420a, and deliver, through the coolant inlet 512a connected to the coolant return port 312a of the charging dispenser 42a, the coolant that absorbs heat of the charging dispenser 42a. The coolant that absorbs the heat flows into the liquid cooling device 50. The coolant that absorbs the heat may be cooled inside the liquid cooling device 50, and the cooled coolant flows into the charging dispenser 42a through the coolant outlet 511a of the liquid cooling device 50. In this way, the charger 420a of the charging dispenser 42a is cooled.

In addition, in this application, it is designed that a two-way valve is connected between the coolant injection port of the charging dispenser and the coolant inlet of the liquid cooling channel of each charger, so that costs can be reduced. In addition, compared with a solution in which the coolant injection port of the charging dispenser is connected to the coolant inlet of the liquid cooling channel of each charger through a multi-way valve, the solution of this application can resolve a problem that the valve may be loose or damaged because different valve ports of the multi-way valve are repeatedly switched and connected, and can further reduce costs.

Still refer to FIG. 5. In an embodiment, a two-way valve is connected between the coolant outlet 513 of the heat exchanger 51 and each coolant outlet of the liquid cooling device 50.

Specifically, a two-way valve 520a is connected between the coolant outlet 513 of the heat exchanger 51 and the coolant outlet 511a of the liquid cooling device 50, and a two-way valve 520b is connected between the coolant outlet 513 of the heat exchanger 51 and the coolant outlet 511b of the liquid cooling device 50. In other words, a valve port of the two-way valve 520a is connected to the coolant outlet 511a, and the other valve port of the two-way valve 520a is connected to the coolant outlet 513 of the heat exchanger 51. In addition, the coolant outlet 511a is connected to the charging dispenser 42a. It is equivalent to that the two-way valve 520a is connected between the heat exchanger 51 and the charging dispenser 42a. A valve port of the two-way valve 520b is connected to the coolant outlet 511b, and the other valve port of the two-way valve 520b is connected to the coolant outlet 513 of the heat exchanger 51. In addition, the coolant outlet 511b is connected to the charging dispenser 42b. It is equivalent that the two-way valve 520b is connected between the heat exchanger 51 and the charging dispenser 42b.

In this embodiment of this application, the liquid cooling channel between the liquid cooling device 50 and the charging dispenser 42a and the liquid cooling channel between the liquid cooling device 50 and the charging dispenser 42b may be separately controlled by controlling the two-way valves 520a and 520b. Specifically, when the charger of the charging dispenser 42a is connected to the electric vehicle, the liquid cooling channel between the liquid cooling device 50 and the charging dispenser 42a may be connected by controlling the two-way valve 520a; and when the charger of the charging dispenser 42b is connected to the electric vehicle, the liquid cooling channel between the liquid cooling device 50 and the charging dispenser 42b may be connected by controlling the two-way valve 520b. The control is simple and easy to implement.

In addition, in this application, it is designed that the two-way valve is connected between each coolant outlet of the liquid cooling device 50 and the coolant outlet of the heat exchanger 51 of the liquid cooling device 50, so that costs can be reduced. In addition, compared with a solution in which the coolant outlet of the heat exchanger 51 of the liquid cooling device 50 is connected to each coolant outlet of the liquid cooling device 50 through a multi-way valve, the solution of this application can resolve a problem that the valve may be loose or damaged because different valve ports of the multi-way valve are repeatedly switched and connected, and further reduce costs.

In addition, by controlling the two two-way valves 520a and 520b, liquid cooling channels between the liquid cooling device 50 and the charging dispenser 42 can be disconnected, which facilitates maintenance of the liquid cooling device 50. In this way, reliability of delivering the coolant by the liquid cooling device 50 to the charging dispenser 42 can be improved, and reliability of performing high-power charging on the electric vehicle 60 by the charging dispenser 42 can be improved, to further improve user experience.

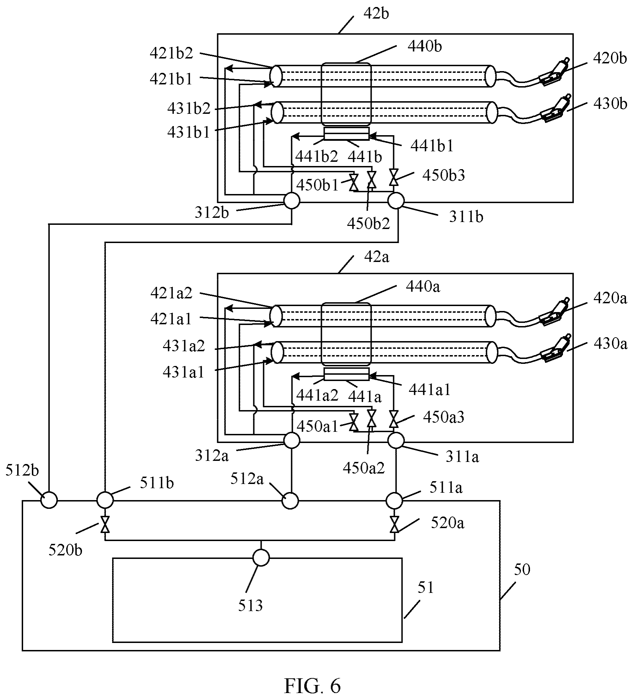

As shown in FIG. 4, each liquid cooling device may further include one power distribution component and a heat exchanger. Correspondingly, as shown in FIG. 6, each charging dispenser further includes one two-way valve, a valve port of the one two-way valve is connected to the coolant inlet of the liquid cooling channel of the heat exchanger of the charging dispenser, and the other valve port of the one two-way valve is connected to the coolant injection port of the corresponding charging dispenser.

Specifically, refer to FIG. 6. The charging dispenser 42a further includes one two-way valve 450a3, where a valve port of the two-way valve 450a3 is connected to the coolant inlet 441a1 of the liquid cooling channel of the heat exchanger 441a, and the other valve port of the two-way valve 450a3 is connected to the coolant injection port 311a. In other words, the two-way valve 450a3 is connected between the coolant injection port 311a and the coolant inlet 441a1 of the liquid cooling channel of the heat exchanger 441a.

The charging dispenser 42b further includes one two-way valve 450b3, where a valve port of the two-way valve 450b3 is connected to the coolant inlet 441b1 of the liquid cooling channel of the heat exchanger 441b, and the other valve port of the two-way valve 450b3 is connected to the coolant injection port 311b. In other words, the two-way valve 450b3 is connected between the coolant injection port 311b and the coolant inlet 441b1 of the liquid cooling channel of the heat exchanger 441b.

In this embodiment of this application, when a charger of a charging dispenser is connected to an electric vehicle, the charging dispenser may control a two-way valve connected to the charger to connect a liquid cooling channel between a liquid cooling device and the charger, and control a two-way valve connected to a heat exchanger of the charging dispenser to connect a liquid cooling channel between the liquid cooling device and the heat exchanger of the charging dispenser. It is equivalent to that each cooling channel between the liquid cooling device and the charging dispenser is separately controlled by one two-way valve. The control is simple and easy to implement.

For example, when the charger 420a of the charging dispenser 42a is connected to the electric vehicle, that is, when the charger 420a delivers electric energy to the electric vehicle, the charging dispenser 42a controls the two-way valve 450al to connect the liquid cooling channel between the liquid cooling device 50 and the charger 420a, and controls the two-way valve 450a3 to connect the liquid cooling channel between the liquid cooling device 50 and the heat exchanger. In this case, the liquid cooling device 50 may deliver the coolant to the liquid cooling channel of the charger 420a and the liquid cooling channel of the heat exchanger 441a, and deliver, through the coolant inlet 512a connected to the coolant return port 312a of the charging dispenser 42a, the coolant that absorbs heat of the charging dispenser 42a. The coolant that absorbs the heat flows into the liquid cooling device 50. The coolant that absorbs the heat may be cooled inside the liquid cooling device 50, and the cooled coolant flows into the charging dispenser 42a through the coolant outlet 511a of the liquid cooling device 50. In this way, the charger 420a and the power distribution component 440a of the charging dispenser 42a are cooled.

In an embodiment, the liquid cooling device includes M groups of coolant inlets and M groups of coolant outlets, each group of coolant inlets includes N coolant inlets, each group of coolant outlets includes N coolant outlets, the charging device includes M charging dispensers, the to-be-cooled component of each charging dispenser includes N chargers, and both M and N are integers greater than or equal to 1.

In addition, the M groups of coolant outlets are connected to the M charging dispensers in a one-to-one correspondence, the M groups of coolant inlets are connected to the M charging dispensers in a one-to-one correspondence, the N coolant outlets of each group of coolant outlets are connected to N coolant injection ports of one charging dispenser in a one-to-one correspondence, and the N coolant inlets of each group of coolant inlets are connected to N coolant return ports of one charging dispenser.

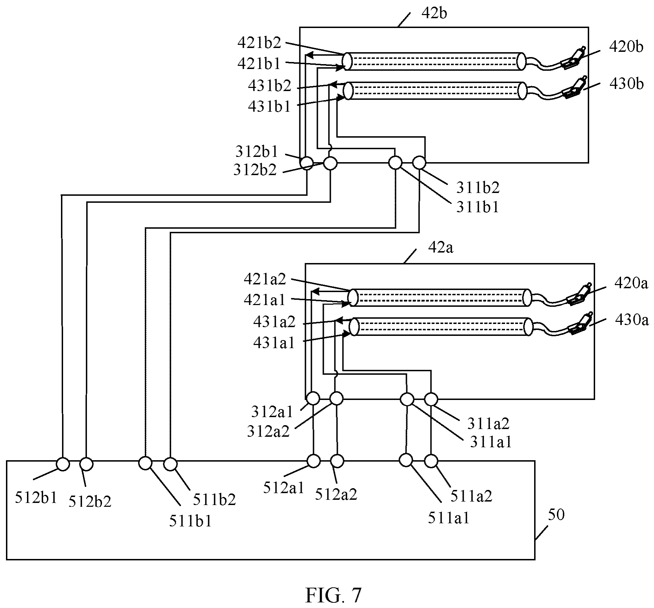

For example, M is 2 and N is 2. Refer to FIG. 7. The liquid cooling device 50 includes two groups of coolant outlets and two groups of coolant inlets, each group of coolant outlets includes two coolant outlets, and each group of coolant inlets includes two coolant inlets. A group of coolant outlets includes coolant outlets 511a1 and 511a2, a group of coolant inlets includes 512a1 and 512a2, the other group of coolant outlets includes coolant outlets 511b1 and 511b2, and the other group of coolant inlets includes coolant inlets 512b1 and 512b2.

The charging device 40 includes two charging dispensers, and the two charging dispensers are charging dispensers 42a and 42b, respectively. The group of coolant outlets is connected to coolant injection ports of the charging dispenser 42a, and the group of coolant inlets is connected to coolant return ports of the charging dispenser 42a. Specifically, the coolant outlet 511a1 is connected to a coolant injection port 311a1 of the charging dispenser 42a, and the coolant outlet 511a2 is connected to a coolant injection port 311a2 of the charging dispenser 42a. The coolant inlet 512a1 is connected to a coolant return port 312al of the charging dispenser 42a, and the coolant inlet 512a2 is connected to a coolant return port 312a2 of the charging dispenser 42a.

The other group of coolant outlets is connected to coolant injection ports of the charging dispenser 42b, and the other group of coolant inlets is connected to coolant return ports of the charging dispenser 42b. Specifically, the coolant outlet 511b1 is connected to a coolant injection port 311b1 of the charging dispenser 42b, and the coolant outlet 511b2 is connected to a coolant injection port 311b2 of the charging dispenser 42b. The coolant inlet 512b1 is connected to a coolant return port 312b1 of the charging dispenser 42b, and the coolant inlet 512b2 is connected to a coolant return port 312b2 of the charging dispenser 42b.

In this embodiment of this application, the N coolant injection ports are connected to coolant inlets of liquid cooling channels of N chargers in a one-to-one correspondence, and the N coolant return ports are connected to coolant outlets of the liquid cooling channels of the N chargers in a one-to-one correspondence.

Still refer to FIG. 7. The charging dispenser 42a includes two chargers 420a and 430a. The coolant injection port 311a1 of the charging dispenser 42a is connected to a coolant inlet 421al of a liquid cooling channel of the charger 420a, and the coolant injection port 311a2 of the charging dispenser 42a is connected to a coolant inlet 431a1 of a liquid cooling channel of the charger 430a. The coolant return port 312al of the charging dispenser 42a is connected to a coolant outlet 421a2 of the liquid cooling channel of the charger 420a, and the coolant return port 312a2 of the charging dispenser 42a is connected to a coolant outlet 431a2 of the liquid cooling channel of the charger 430a.

The charging dispenser 42b includes two chargers 420b and 430b. The coolant injection port 311b1 of the charging dispenser 42b is connected to a coolant inlet 421b1 of a liquid cooling channel of the charger 420b, and the coolant injection port 311b2 of the charging dispenser 42b is connected to a coolant inlet 431b1 of a liquid cooling channel of the charger 430b. The coolant return port 312b1 of the charging dispenser 42b is connected to a coolant outlet 421b2 of the liquid cooling channel of the charger 420b, and the coolant return port 312b2 of the charging dispenser 42b is connected to a coolant outlet 431b2 of the liquid cooling channel of the charger 430b.

In this embodiment of this application, in a process in which the charging device 40 charges the electric vehicle, the liquid cooling device 50 may deliver the coolant to the charging dispenser of the charging device 40. For example, the charger 420a of the charging dispenser 42a is connected to the electric vehicle. In this example, the charger 420a delivers electric energy to the electric vehicle. In this case, the liquid cooling device 50 may deliver the coolant to the liquid cooling channel of the charger 420a, and deliver, through the coolant inlet 512a1 connected to the coolant return port 312al of the charging dispenser 42a, the coolant that absorbs heat of the charging dispenser 42a. The coolant that absorbs the heat flows into the liquid cooling device 50. The coolant that absorbs the heat may be cooled inside the liquid cooling device 50, and the cooled coolant flows into the charging dispenser 42a through the coolant outlet 511a1 of the liquid cooling device 50. In this way, the charging dispenser 42a is cooled.

Specifically, in a process in which the liquid cooling device 50 delivers the coolant to the liquid cooling channel of the charger 420a, a flow direction of the coolant may be as follows: coolant outlet 511al->coolant injection port 311al of the charging dispenser 42a->coolant inlet 421a1 of the liquid cooling channel of the charger 420a->coolant outlet 421a2 of the liquid cooling channel of the charger 420a->coolant return port 312al of the charging dispenser 42a->coolant inlet 512al.

When the chargers 420a and 430a of the charging dispenser 42a are connected to the electric vehicle, the liquid cooling device 50 may deliver the coolant to the liquid cooling channels of the chargers 420a and 430a. For the flow direction of the coolant delivered by the liquid cooling device 50 to the liquid cooling channel of the charger 420a, refer to the foregoing description. A flow direction of the coolant delivered by the liquid cooling device 50 to the liquid cooling channel of the charger 430a may be as follows: coolant outlet 511a2->coolant injection port 311a2 of the charging dispenser 42a->coolant inlet 431a1 of the liquid cooling channel of the charger 430a->coolant outlet 431a2 of the liquid cooling channel of the charger 430a->coolant return port 312a2 of the charging dispenser 42a->coolant inlet 512a2. In an example, the charger 420a of the charging dispenser 42a and the charger 420b of the charging dispenser 42b are connected to the electric vehicle, that is, both the chargers 420a and 420b deliver electric energy to the electric vehicle. In this case, the liquid cooling device 50 may deliver the coolant to the liquid cooling channels of the chargers 420a and 420b. The liquid cooling device 50 delivers the coolant to the liquid cooling channel of the charger 420a. The coolant that absorbs the heat of the charging dispenser 42a is delivered through the coolant inlet 512a1 connected to the coolant return port 312a1 of the charging dispenser 42a. The coolant that absorbs the heat flows into the liquid cooling device 50. The coolant that absorbs the heat may be cooled inside the liquid cooling device 50, and the cooled coolant flows into the charging dispenser 42a through the coolant outlet 511a1 of the liquid cooling device 50. In this way, the charging dispenser 42a is cooled. The liquid cooling device 50 delivers the coolant to the liquid cooling channel of the charger 420b. The coolant that absorbs the heat of the charging dispenser 42b is delivered through the coolant inlet 512b1 connected to the coolant return port 312b1 of the charging dispenser 42b. The coolant that absorbs the heat flows into the liquid cooling device 50. The coolant that absorbs the heat may be cooled inside the liquid cooling device 50, and the cooled coolant flows into the charging dispenser 42b through the coolant outlet 511b1 of the liquid cooling device 50. In this way, the charging dispenser 42b is cooled.

Specifically, in a process in which the liquid cooling device 50 delivers the coolant to the liquid cooling channel of the charger 420a, for a flow direction of the coolant, refer to the foregoing description. Details are not described again.

In a process in which the liquid cooling device 50 delivers the coolant to the liquid cooling channel of the charger 420b, a flow direction of the coolant may be as follows: coolant outlet 511b1->coolant injection port 311b1 of the charging dispenser 42b->coolant inlet 421b1 of the liquid cooling channel of the charger 420b->coolant outlet 421b2 of the liquid cooling channel of the charger 420b->coolant return port 312b1 of the charging dispenser 42b->coolant inlet 512b1.

Based on the foregoing solution, because the M groups of coolant outlets are connected to the M charging dispensers in the one-to-one correspondence, and the M groups of coolant inlets are connected to the M charging dispensers in the one-to-one correspondence, when chargers of one or more charging dispensers are connected to the electric vehicle, the coolant is delivered to corresponding charging dispensers through a group of coolant outlets connected to the one or more charging dispensers in the liquid cooling device 50, to meet a heat dissipation requirement of each charging dispenser. In this way, it can be ensured as much as possible that each charging dispenser normally charges the electric vehicle, to improve reliability of charging the electric vehicle by the charging dispenser, and further improve user experience.

In addition, in the liquid cooling device 50, the each group of coolant outlets include the N coolant outlets, the M groups of coolant inlets include the N coolant inlets, the N coolant outlets of each group of coolant outlets are connected to the N coolant injection ports of the one charging dispenser in the one-to-one correspondence, and the N coolant inlets of each group of coolant inlets are connected to the N coolant return ports of the one charging dispenser. In this way, the liquid cooling device 50 delivers the coolant to coolant inlets of liquid cooling channels of different liquid cooling supply connectors through different coolant outlets, the coolant flowing out of a coolant outlet of a liquid cooling channel of each liquid cooling supply connector flows into the liquid cooling device through different coolant inlets of the liquid cooling device 50, and even if leakage occurs at a coolant inlet/outlet of the liquid cooling device 50 or a coolant inlet/outlet of the charging device, delivering the coolant by the liquid cooling device 50 to liquid cooling channels of other chargers of the charging device through other coolant inlets/outlets is not affected. Therefore, reliability of overall heat dissipation performed by the liquid cooling device 50 for the M charging dispensers can be improved.

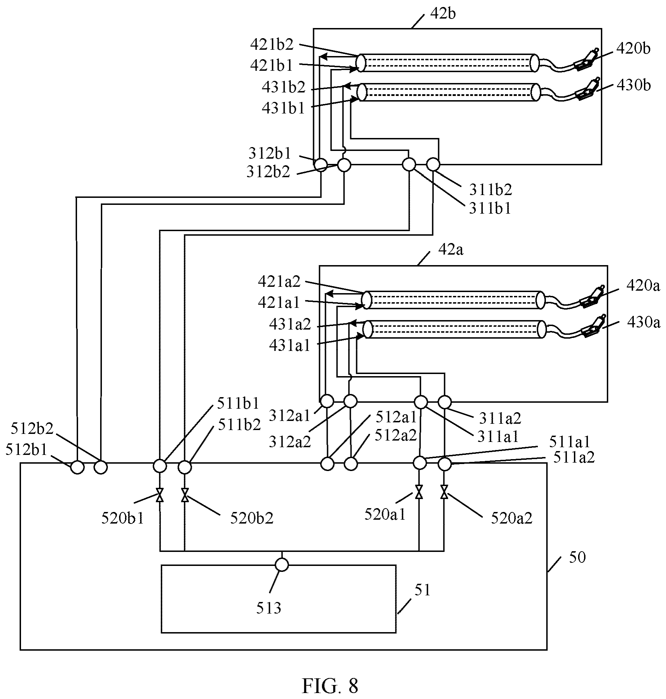

In an embodiment, still refer to FIG. 8. A two-way valve is connected between the coolant outlet 513 of the heat exchanger 51 and each coolant outlet of the liquid cooling device 50.

Refer to FIG. 8. The liquid cooling device 50 includes four coolant outlets 511al, 511a2, 511b1, and 511b2, and two-way valves 520al, 520a2, 520b1, and 520b2 are respectively and sequentially connected between the coolant outlet 513 of the heat exchanger 51 and the four coolant outlets 511al, 511a2, 511b1, and 511b2 of the liquid cooling device 50.

Specifically, the two-way valve 520al is connected between the coolant outlet 513 of the heat exchanger 51 and the coolant outlet 511a1 of the liquid cooling device 50. The two-way valve 520a2 is connected between the coolant outlet 513 of the heat exchanger 51 and the coolant outlet 511a2 of the liquid cooling device 50. In other words, a valve port of the two-way valve 520al is connected to the coolant outlet 511a1, and the other valve port of the two-way valve 520a1 is connected to the coolant outlet 513 of the heat exchanger 51, that is, the two-way valve 520al is connected between the coolant outlet 511a1 and the coolant outlet 513 of the heat exchanger 51. A valve port of the two-way valve 520a2 is connected to the coolant outlet 511a2, and the other valve port of the two-way valve 520a2 is connected to the coolant outlet 513 of the heat exchanger 51, that is, the two-way valve 520a2 is connected between the coolant outlet 511a2 and the coolant outlet 513 of the heat exchanger 51.

The two-way valve 520b1 is connected between the coolant outlet 513 of the heat exchanger 51 and the coolant outlet 511b1 of the liquid cooling device 50. The two-way valve 520b2 is connected between the coolant outlet 513 of the heat exchanger 51 and the coolant outlet 511b2 of the liquid cooling device 50. In other words, a valve port of the two-way valve 520b1 is connected to the coolant outlet 511b1, and the other valve port of the two-way valve 520b1 is connected to the coolant outlet 513 of the heat exchanger 51, that is, the two-way valve 520b1 is connected between the coolant outlet 511b1 and the coolant outlet 513 of the heat exchanger 51. A valve port of the two-way valve 520b2 is connected to the coolant outlet 511b2, and the other valve port of the two-way valve 520b2 is connected to the coolant outlet 513 of the heat exchanger 51, that is, the two-way valve 520b2 is connected between the coolant outlet 511b2 and the coolant outlet 513 of the heat exchanger 51.

It can be learned from the foregoing descriptions that the liquid cooling device 50 and the liquid cooling channel of each charger are controlled by one two-way valve separately. When a charger of a charging dispensers is connected to the electric vehicle, the liquid cooling device 50 can control a two-way valve connected to a liquid cooling channel of the charger of the charging dispenser to connect the liquid cooling channel between the liquid cooling device and the charger. The control is simple and easy to implement.

For example, when the charger 420a of the charging dispenser 42a is connected to the electric vehicle, that is, when the charger 420a delivers electric energy to the electric vehicle, the liquid cooling device 50 controls the two-way valve 520al to connect the liquid cooling channel between the liquid cooling device 50 and the charger 420a. In this case, the liquid cooling device 50 may deliver the coolant to the liquid cooling channel of the charger 420a, and deliver, through the coolant inlet 512a1 connected to the coolant return port 312a1 of the charging dispenser 42a, the coolant that absorbs heat of the charging dispenser 42a. The coolant that absorbs the heat flows into the liquid cooling device 50. The coolant that absorbs the heat may be cooled inside the liquid cooling device 50, and the cooled coolant flows into the charging dispenser 42a through the coolant outlet 511a1 of the liquid cooling device 50. In this way, the charger 420a of the charging dispenser 42a is cooled.

In addition, in this application, it is designed that the two-way valve is connected between each coolant outlet of the liquid cooling device 50 and the coolant outlet of the heat exchanger of the liquid cooling device 50, so that costs can be reduced. In addition, compared with a solution in which the coolant outlet of the heat exchanger of the liquid cooling device 50 is connected to each coolant outlet of the liquid cooling device through a multi-way valve, the solution of this application can resolve a problem that the valve may be loose or damaged because different valve ports of the multi-way valve are repeatedly switched and connected, and further reduce costs.

In addition, the two-way valve is connected between the coolant outlet of the heat exchanger of the liquid cooling device 50 and each coolant outlet of the liquid cooling device 50. By controlling the two-way valve, a channel between the liquid cooling device and the charging dispenser can be disconnected, which facilitates maintenance of the liquid cooling device. In this way, reliability of delivering the coolant by the liquid cooling device to the charging dispenser can be improved, and reliability of performing high-power charging on the electric vehicle by the charging dispenser can be improved, to further improve user experience.

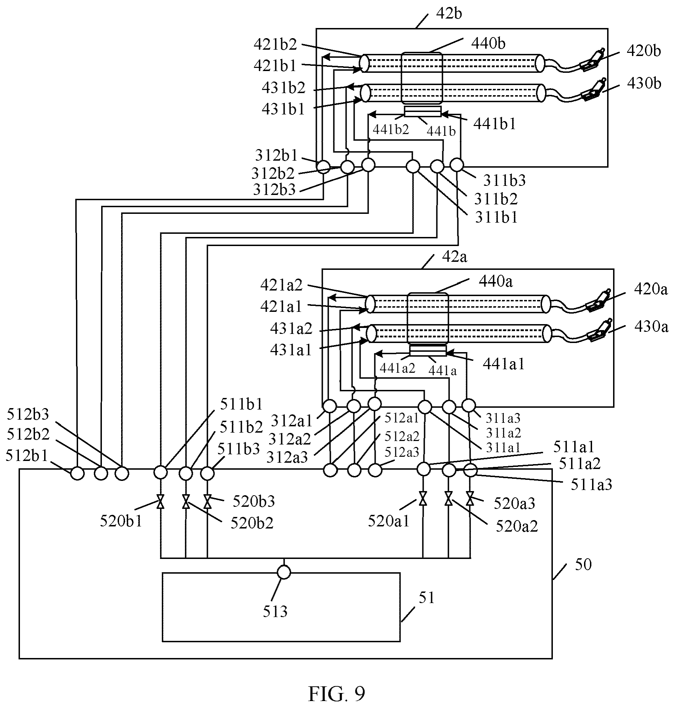

It should be noted that, in an embodiment, as shown in FIG. 9, each charging dispenser further includes a power distribution component and a heat exchanger. The power distribution component is connected between the charger and the charging module. The heat exchanger of the charging dispenser includes a liquid cooling channel and a gas channel. The liquid cooling channel of the heat exchanger of the charging dispenser is configured to exchange heat with the gas channel.

Specifically, refer to FIG. 9. The charging dispenser 42a further includes one power distribution component 440a and a heat exchanger 441a, and a liquid cooling channel of the heat exchanger 441a is configured to dissipate heat for gas in the power distribution component 440a. A coolant injection port 311a3 of the charging dispenser 42a is also connected to a coolant inlet 441a1 of the liquid cooling channel of the heat exchanger 441a. A coolant return port 312a3 of the charging dispenser 42a is also connected to a coolant outlet 441a2 of the liquid cooling channel of the heat exchanger 441a.

The charging dispenser 42b further includes one power distribution component 440b and a heat exchanger 441b, and a liquid cooling channel of the heat exchanger 441b is configured to dissipate heat for gas in the power distribution component 440b. A coolant injection port 311b3 of the charging dispenser 42b is also connected to a coolant inlet 441b1 of the liquid cooling channel of the heat exchanger 441b. A coolant return port 312b3 of the charging dispenser 42b is also connected to a coolant outlet 441b2 of the liquid cooling channel of the heat exchanger 441b.

For specific functions of the power distribution component and the heat exchanger of the charging dispenser, refer to related content in FIG. 4. For brevity, details are not described herein again.

In addition, in FIG. 9, the liquid cooling device 50 further includes two two-way valves 520a3 and 520b3, where a valve port of the two-way valve 520a3 is connected to the coolant outlet 513 of the liquid cooling channel of the heat exchanger 51, and the other valve port of the two-way valve 520a3 is connected to the coolant outlet 511a3 of the liquid cooling device 50. A valve port of the two-way valve 520b3 is connected to the coolant outlet 513 of the liquid cooling channel of the heat exchanger 51, and the other valve port of the two-way valve 520b3 is connected to the coolant outlet 511b3 of the liquid cooling device 50.

Functions of the two two-way valves 520a3 and 520b3 are similar to those of the two-way valves 520al, 520a2, 520b1, and 520b2 in FIG. 6. For details, refer to related content in FIG. 6. For brevity, details are not described herein again.

The following describes content of a packet sent by the charging device 40 to the liquid cooling device 50. The content of the packet sent by the charging device 40 to the liquid cooling device 50 is related to the connection between the charging device 40 and the liquid cooling device 50. For details, refer to descriptions below.

In an embodiment, when a connection relationship between the liquid cooling device 50 and the charging device 40 is a connection relationship in any one of the embodiments in FIG. 3 to FIG. 6, N is an integer greater than or equal to 2, and when a plurality of chargers in the N chargers are connected to electric vehicles, the charging dispenser is configured to send at least one of the following packets to the liquid cooling device: a packet for requesting the liquid cooling device to output the coolant, a packet indicating a total coolant flow rate required by the plurality of chargers, and a packet indicating a lowest coolant temperature required by the plurality of chargers.

Refer to FIG. 5. It is assumed that the chargers 420a and 430a of the charging dispenser 42a in the two charging dispensers 42a and 42b are connected to the electric vehicle, and then the charging device may send, to the liquid cooling device, a packet for requesting the coolant for the charging dispenser 42a. The packet includes at least one of the following: a packet for requesting the liquid cooling device 50 to output the coolant, a packet indicating a total coolant flow rate required by the chargers 420a and 430a, and a packet indicating a lowest coolant temperature required by the chargers 420a and 430a.

For example, when a coolant flow rate required by the charger 420a is F1 and a temperature is T1, a coolant flow rate required by the charger 430a is F2 and a temperature is T2, and T1 < T2, the packet sent by the charging device 40 to the liquid cooling device 50 may include at least one of the following: a packet for requesting the liquid cooling device 50 to output the coolant, a packet indicating a total coolant flow rate (F1 + F2) required by the chargers 420a and 430a, and a packet indicating the coolant temperature T1 required by the chargers 420a and 430a. In this way, the liquid cooling device 50 may deliver the coolant with the flow rate (F1 + F2) and the temperature T1 to the charging dispenser 42a based on received packets. This helps meet a heat dissipation requirement of the chargers 420a and 430a, and further helps ensure normal high-power charging performed by the charging dispenser 42a on the electric vehicle, to improve user experience.

In embodiments of this application, the charging dispenser 42 sends at least one of the foregoing packets to the liquid cooling device 50, and the liquid cooling device 50 may deliver the coolant with a corresponding parameter to the charging dispenser 42 based on content of the packet. This helps meet a heat dissipation requirement of each charger, and further helps ensure normal high-power charging performed by the charging dispenser 42 on the electric vehicle 60, to improve user experience.

In addition, in embodiments of this application, the packet sent by the charging dispenser 42 to the liquid cooling device 50 includes the packet indicating the total coolant flow rate required by the plurality of chargers, that is, the charging dispenser 42 only needs to send one packet about the total coolant flow rate to the liquid cooling device 50. This can reduce packet complexity and improve transmission efficiency.

In addition, the packet sent by the charging dispenser 42 to the liquid cooling device 50 includes the packet indicating the lowest coolant temperature required by the plurality of chargers, that is, the charging dispenser 42 only needs to send the packet indicating the lowest coolant temperature required by the plurality of chargers to the liquid cooling device 50. In this way, the coolant output by the liquid cooling device to the charging dispenser can meet a heat dissipation requirement of each charger, and this can ensure normal high-power charging performed by the charging dispenser 42 on the electric vehicle 60, to further improve user experience.

In an embodiment, the charging device 40 is further configured to control an opening degree of a valve port of the two-way valve corresponding to the liquid cooling channel of each of the plurality of chargers, so that a flow rate of the coolant flowing into the liquid cooling channel of each charger meets a flow rate requirement of the charger.

In this embodiment of this application, still refer to FIG. 5. As described above, the liquid cooling device 50 delivers the coolant with the flow rate (F1 + F2) and the temperature T1 to the charging dispenser 42a. For the charging device 40, the charging device 40 receives the coolant with the flow rate (F1 + F2). In this case, the charging device 40 may control opening degrees of valve ports of the two-way valves 450al and 450a2, so that the coolant flow rate of the liquid cooling channel of the charger 420a reaches F1 and the coolant flow rate of the liquid cooling channel of the charger 430a reaches F2, to meet heat dissipation requirements of the chargers 420a and 430a. This can ensure normal high-power charging performed by the charging dispenser 42a on the electric vehicle, to improve user experience.

It should be understood that in some possible implementations, when a connection relationship between the liquid cooling device 50 and the charging device 40 is a connection relationship in any one of the embodiments in FIG. 3 to FIG. 6, the packet sent by the charging device 40 to the liquid cooling device 50 may also include at least one of the following: a packet for requesting the liquid cooling device 50 to output the coolant, a packet indicating a coolant flow rate required by each of the plurality of chargers, and a packet indicating a coolant temperature required by each of the plurality of chargers.

For example, refer to FIG. 5. When a coolant flow rate required by the charger 420a is F1 and a temperature is T1, a coolant flow rate required by the charger 430a is F2 and a temperature is T2, and T1 < T2, the packet sent by the charging device 40 to the liquid cooling device 50 may include at least one of the following: a packet for requesting the liquid cooling device 50 to output the coolant, a packet indicating the coolant flow rate F1 required by the charger 420a and the coolant flow rate F2 required by the charger 430a, and a packet indicating the coolant temperature T1 required by the charger 420a and the coolant temperature T2 required by the charger 430a. In this way, the liquid cooling device 50 may deliver the coolant with the flow rate (F1 + F2) and the temperature T1 to the charging dispenser 42a based on the received packet. After receiving the packet, the liquid cooling device 50 may deliver the coolant with the flow rate (F1 + F2) and the temperature T1 to the charging device 40. The charging device 40 may control valve port ports of the two-way valves 450al and 450a2, so that the coolant flow rate of the liquid cooling channel of the charger 420a reaches F1 and the coolant flow rate of the liquid cooling channel of the charger 430a reaches F2, to meet heat dissipation requirements of the chargers 420a and 430a. This can ensure normal high-power charging performed by the charging dispenser 42a on the electric vehicle, to improve user experience.

In an embodiment, when a connection relationship between the liquid cooling device 50 and the charging device 40 is a connection relationship in any one of the embodiments in FIG. 7 to FIG. 9, N is an integer greater than or equal to 2, and when a plurality of chargers in the N chargers are connected to electric vehicles, the charging dispenser 42 is configured to send at least one of the following packets to the liquid cooling device 50: a packet for requesting the liquid cooling device 50 to output the coolant, a packet indicating a coolant flow rate required by each of the plurality of chargers, and a packet indicating a lowest coolant temperature required by the plurality of chargers.

Refer to FIG. 8. It is assumed that the chargers 420a and 430a of the charging dispenser 42a in the two charging dispensers 42a and 42b are connected to the electric vehicle, and then the charging device may send, to the liquid cooling device, a packet for requesting the coolant for the charging dispenser 42a. The packet includes at least one of the following: a packet for requesting the liquid cooling device 50 to output the coolant, a packet indicating a coolant flow rate required by each of the chargers 420a and 430a, and a packet indicating a lowest coolant temperature required by the chargers 420a and 430a.

For example, when a coolant flow rate required by the charger 420a is F1 and a temperature is T1, a coolant flow rate required by the charger 430a is F2 and a temperature is T2, and T1 < T2, the packet sent by the charging device 40 to the liquid cooling device 50 may include at least one of the following: a packet for requesting the liquid cooling device 50 to output the coolant, a packet indicating a coolant flow rate F1 required by the charger 420a and a coolant flow rate F2 required by the charger 430a, and a packet indicating the coolant temperature T1 required by the chargers 420a and 430a. In this way, the liquid cooling device 50 may deliver, based on received packets, the coolant with the flow rate F1 and the temperature T1 to the charger 420a, and the coolant with the flow rate F2 and the temperature T1 to the charger 430a. This can meet a heat dissipation requirement of the chargers 420a and 430a, and further ensure normal high-power charging performed by the charging dispenser 42a on the electric vehicle, to improve user experience.

It should be understood that in some possible implementations, when a connection relationship between the liquid cooling device 50 and the charging device 40 is a connection relationship in any one of the embodiments in FIG. 7 to FIG. 9, the charging dispenser 42 is configured to send at least one of the following packets to the liquid cooling device 50: a packet for requesting the liquid cooling device 50 to output the coolant, a packet indicating a coolant flow rate required by each of the plurality of chargers, and a packet indicating a coolant temperature required by each of the plurality of chargers.

For example, when a coolant flow rate required by the charger 420a is F1 and a temperature is T1, a coolant flow rate required by the charger 430a is F2 and a temperature is T2, and T1 < T2, the packet sent by the charging device 40 to the liquid cooling device 50 may include at least one of the following: a packet for requesting the liquid cooling device 50 to output the coolant, a packet indicating the coolant flow rate F1 required by the charger 420a and the coolant flow rate F2 required by the charger 430a, and a packet indicating the coolant temperature T1 required by the charger 420a and the coolant temperature T2 required by the charger 430a. In this way, the liquid cooling device 50 may deliver, based on received packets, the coolant with the flow rate F1 and the temperature T1 to the charger 420a, and the coolant with the flow rate F2 and the temperature T1 to the charger 430a, or the liquid cooling device 50 may deliver, based on received packets, the coolant with the flow rate F1 and the temperature T1 to the charger 420a, and the coolant with the flow rate F2 and the temperature T2 to the charger 430a. This can meet a heat dissipation requirement of the chargers 420a and 430a, and further ensure normal high-power charging performed by the charging dispenser 42a on the electric vehicle, to improve user experience.

In this embodiment of this application, the charging dispenser 42 sends at least one of the foregoing packets to the liquid cooling device 50, and the liquid cooling device 50 may deliver the coolant with a corresponding parameter to the charging dispenser 42 based on content of the packet. This helps meet a heat dissipation requirement of each charger, and further helps ensure normal high-power charging performed by the charging dispenser 42 on the electric vehicle 60, to improve user experience.

In addition, in this embodiment of this application, the packet sent by the charging dispenser 42 to the liquid cooling device 50 includes the packet indicating the coolant flow rate required by each of the plurality of chargers, that is, the charging dispenser 42 sends the packet indicating the coolant flow rate required by each charger to the liquid cooling device 50. In this way, the liquid cooling device 50 may deliver the coolant with a corresponding flow rate based on the coolant required by each charger. This is easy to implement.

In addition, the packet sent by the charging dispenser 42 to the liquid cooling device 50 includes the packet indicating the lowest coolant temperature required by the plurality of chargers, that is, the charging dispenser 42 only needs to send the packet indicating the lowest coolant temperature required by the plurality of chargers to the liquid cooling device 50. In this way, a temperature of the coolant output by the liquid cooling device to the charging dispenser can meet a heat dissipation requirement of each charger, and this can ensure normal high-power charging performed by the charging dispenser 42 on the electric vehicle 60, to further improve user experience.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A charging pile, wherein the charging pile comprises a liquid cooling device and a charging device, the liquid cooling device comprises a heat exchanger, a coolant inlet and a coolant outlet of the heat exchanger are connected to a liquid cooling channel of a to-be-cooled component in the charging device to form a coolant supply loop, the liquid cooling device further comprises a liquid cooling connector, the liquid cooling connector is configured to connect to a liquid cooling port of an electric vehicle, and the liquid cooling device is configured to output coolant to the electric vehicle through the liquid cooling connector; and
the charging device is configured to:
deliver electric energy to the electric vehicle when receiving a packet indicating that the liquid cooling device has delivered the coolant to the electric vehicle.

2. The charging pile according to claim 1, wherein the charging device is configured to:
when the liquid cooling device delivers the coolant to the charging device, and a pressure of the liquid cooling channel is less than a first preset required pressure, or a flow velocity of the liquid cooling channel is less than a first preset required flow velocity, reduce a power for delivery to the electric vehicle, and send, to the liquid cooling device, a packet indicating to stop coolant delivery, wherein
the first preset required pressure is a pressure corresponding to the liquid cooling channel when the charging device charges the electric vehicle at a power required by the electric vehicle and the liquid cooling device delivers the coolant to the charging device at a coolant flow rate required by the charging device; and
the first preset required flow velocity is a flow velocity corresponding to the liquid cooling channel when the charging device charges the electric vehicle at the power required by the electric vehicle and the liquid cooling device delivers the coolant to the charging device at the coolant flow rate required by the charging device.

3. The charging pile according to claim 1 or 2, wherein the charging device is configured to:
when the liquid cooling device delivers the coolant to the electric vehicle, and a pressure of a liquid cooling channel between the liquid cooling device and the electric vehicle is less than a second preset required pressure, or a flow velocity of a liquid cooling channel between the liquid cooling device and the electric vehicle is less than a second preset required flow velocity, stop delivering electric energy to the electric vehicle, wherein
the second preset required pressure is a pressure corresponding to the liquid cooling channel between the liquid cooling device and the electric vehicle when the charging device charges the electric vehicle at the power required by the electric vehicle and the liquid cooling device delivers the coolant to the electric vehicle at a coolant flow rate required by the electric vehicle; and
the second preset required flow velocity is a flow velocity corresponding to the liquid cooling channel between the liquid cooling device and the electric vehicle when the charging device charges the electric vehicle at the power required by the electric vehicle and the liquid cooling device delivers the coolant to the electric vehicle at the coolant flow rate required by the electric vehicle.

4. The charging pile according to any one of claims 1 to 3, wherein when the charging device is connected to the electric vehicle, the charging device is further configured to:
receive a packet for requesting the liquid cooling device to output the coolant to the electric vehicle; and
send, to the liquid cooling device, the packet for requesting the liquid cooling device to output the coolant to the electric vehicle, and a packet for requesting the liquid cooling device to output the coolant to the charging device.

5. The charging pile according to any one of claims 1 to 4, wherein the liquid cooling device comprises M coolant inlets and M coolant outlets, the charging device comprises M charging dispensers, a to-be-cooled component of each charging dispenser comprises N chargers, and both M and N are integers greater than or equal to 1;
the M coolant outlets are connected to coolant injection ports of the M charging dispensers in a one-to-one correspondence, and the M coolant inlets are connected to coolant return ports of the M charging dispensers in a one-to-one correspondence;
the coolant injection port of the charging dispenser is connected to a coolant inlet of a liquid cooling channel of each of the N chargers; and
the coolant return port of the charging dispenser is connected to a coolant outlet of the liquid cooling channel of each of the N chargers.

6. The charging pile according to claim 5, wherein each charging dispenser comprises N two-way valves, and the N two-way valves are connected to the liquid cooling channels of the N chargers in a one-to-one correspondence; and
one valve port of each of the N two-way valves is connected to a coolant inlet of corresponding liquid cooling channel, and the other valve port of each of the N two-way valves is connected to a coolant injection port of corresponding charging dispenser.

7. The charging pile according to any one of claims 1 to 4, wherein the liquid cooling device comprises M groups of coolant inlets and M groups of coolant outlets, each group of coolant inlets comprises N coolant inlets, each group of coolant outlets comprises N coolant outlets, the charging device comprises M charging dispensers, ato-be-cooled component of each charging dispenser comprises N chargers, and both M and N are integers greater than or equal to 1;
the M groups of coolant outlets are connected to the M charging dispensers in a one-to-one correspondence, the M groups of coolant inlets are connected to the M charging dispensers in a one-to-one correspondence, the N coolant outlets of each group of coolant outlets are connected to N coolant injection ports of one charging dispenser in a one-to-one correspondence, and the N coolant inlets of each group of coolant inlets are connected to N coolant return ports of one charging dispenser; and
the N coolant injection ports are connected to coolant inlets of liquid cooling channels of corresponding N chargers in a one-to-one correspondence, and the N coolant return ports are connected to coolant outlets of liquid cooling channels of corresponding N chargers in a one-to-one correspondence.

8. The charging pile according to any one of claims 5 to 7, wherein a two-way valve is connected between the coolant outlet of the heat exchanger and each coolant outlet of the liquid cooling device.

9. The charging pile according to claim 5 or 6, wherein N is an integer greater than or equal to 2, and when a plurality of chargers in the N chargers are connected to electric vehicles, the charging dispenser is configured to send at least one of the following packets to the liquid cooling device:
a packet for requesting the liquid cooling device to output the coolant, a packet indicating a total coolant flow rate required by the plurality of chargers, and a packet indicating a lowest coolant temperature required by the plurality of chargers.

10. The charging pile according to claim 9, wherein the charging device is further configured to:
control an opening degree of a valve port of the two-way valve corresponding to the liquid cooling channel of each of the plurality of chargers, so that a flow rate of the coolant flowing into the liquid cooling channel of each charger meets a flow rate requirement of the charger.

11. The charging pile according to claim 7, wherein N is an integer greater than or equal to 2, and when a plurality of chargers in the N chargers are connected to electric vehicles, the charging dispenser is configured to send at least one of the following packets to the liquid cooling device:
a packet for requesting the liquid cooling device to output the coolant, a packet indicating a coolant flow rate required by each of the plurality of chargers, and a packet indicating a lowest coolant temperature required by the plurality of chargers.
